# EUROPEAN PATENT SPECIFICATION

(11) **EP 0 703 727 B1**
(45) Date of publication and mention of the grant of the patent: **25.11.1998**
(21) Application number: 94919429.4
(22) Date of filing: 08.06.1994
(51) Int. Cl.: A23B 7/148, A23L 3/3418, F25D 17/04

(54) **PROCESS FOR SHIPPING AND RIPENING FRUITS AND VEGETABLES USING A CONTROLLED ATMOSPHERE CONTAINER SYSTEM FOR PERISHABLE PRODUCTS**
VERFAHREN ZUM FRUCHTEN-ODER GEMUESE VERSENDEN UND REIFEN MIT GEBRAUCH VON BEHAELTERNSYSTEM MIT KONTROLLIERTER ATMOSPHAERE FUER VERDERBLICHEN WAREN
PROCEDE D'EXPEDITION ET DE MATURATION DE FRUITS ET LEGUMES UTILISANT UN SYSTEME DE CONTENEURS A ATMOSPHERE REGULEE POUR PRODUITS PERISSABLES

(30) Priority: 17.06.1993 US 79357; 08.07.1993 US 89172
(43) Date of publication of application: 03.04.1996
(73) Proprietor: CHIQUITA BRANDS, Inc, Cincinnati, Ohio 45202 (US)
(72) Inventor: HERDEMAN, Robert, W., Loveland, OH 45140 (US); KOWALCZYN, Taras, A., Cincinnati, OH 45249 (US); GRAHAM, Charles, R., Long Beach, MS 39560 (US); HERZSTEIN, John, Harleysville, PA 19438 (US)
(74) Representative: Carpmael, John William Maurice
(86) International application number: US9406503
(87) International publication number: WO9500030

(56) References cited:
- EP-A- 0 160 325
- EP-A- 0 315 309
- EP-A- 0 353 021
- EP-A- 0 520 863
- WO-A-91/15719
- FR-A- 2 606 982
- US-A- 4 467 612

## Description

### TECHNICAL FIELD

This invention relates to an improved controlled atmosphere container and shipping system for perishable products such as fruit, vegetables and the like, and more particularly, to a combination of a plurality of substantially gas tight controlled atmosphere modular containers which are interchangeably connectable to a central source for providing a controlled atmosphere, wherein the system automatically adapts to optimally provide controlled atmosphere to a plurality of connected containers in accordance with a predetermined hierarchy of control mode priorities based upon the relative atmospheric conditions within the connected containers. The system enables optimal control of the controlled atmospheres within a varying number of connected containers. The containers may have widely differing relative internal atmospheric conditions when initially connected to the system, and the system prioritizes provision of controlled atmosphere supply to all of the connected containers in accordance with the preprogrammed hierarchy and the capacity of the system. In addition, the invention relates to a process for shipping and ripening perishable products such as bananas and other fruits and vegetables, and more particularly to a method for uniformly controlling the ripening of such products from harvest to delivery, wherein a single shipping and ripening container enables simultaneous shipping and ripening in a reliably, uniform, predictable, and controllable manner.

### BACKGROUND ART

It is quite common for storing and shipping of perishable products such as fruits, vegetables and the like, to provide refrigeration and/or controlled atmospheres to maintain the freshness of the perishable goods. Particularly, because many perishable goods such as tropical fruits and the like must be shipped relatively long distances to remote markets, it is difficult to maintain the freshness of these goods after harvest during the sometimes extended time periods required for shipping, importation, and distribution. Moreover, for most of these products, it is desired to avoid freezing the products, which can cause extensive damage and deterioration to the quality and desirability of the product.

It is also well known that certain perishable products such as fruits or vegetables can be maintained in fresher condition at above-freezing refrigerated temperatures, especially when maintained in an atmosphere which is less conducive to rapid ripening and spoilage. For example, U.S. Patent 4,716,739, which issued to S. Harris et al., describes a system wherein a container loaded with perishable products is initially flushed with a nitrogen gas to reduce the oxygen level to a base initial level, and thereafter oxygen levels are controlled by selective inflow of ambient air. The carbon dioxide levels (CO₂) are maintained below a predetermined maximum by the use of a CO₂ scrubber device. In the Harris system, however, the seal of the container is critical, as it must be leak tight to a sufficient degree to control the inflow of oxygen, but cannot be completely air-tight, as inflowing ambient air is relied upon to provide a certain minimum oxygen level.

It is also known that fruit and other perishable items continue what is known as "respiration", utilizing oxygen and giving off CO₂, after harvesting. The rate of respiration can fluctuate widely, and is affected greatly by temperatures and oxygen levels in the atmosphere around the products. The Harris patent also refers to previous patents, such as U.S. 3,239,360, which presumably teach the requirement of periodically purging the atmosphere with nitrogen gas based upon controls within the container which respond to oxygen levels within the shipping container itself. Such arrangements, however, were based solely on the oxygen level within the container and required containers designed to allow leakage of gas. These systems also would require relatively large amount of nitrogen for long shipping distances.

A similar prior technology is discussed in the Harris patent, and referred to as the "TECTROL" System associated with the Transfresh Corporation. The container in this system would be sealed prior to shipping and prior to being precharged with a controlled atmosphere gas. During shipping, the oxygen and carbon dioxide levels within the container were to be controlled merely by a bleed hole which enabled the inflow of ambient oxygen, and the inclusion of hydrated lime within the container to absorb excessive amounts of carbon dioxide. In such a situation, it is virtually impossible to adequately maintain the atmospheric conditions within the container throughout the shipping and storage procedures.

Another fresh food storing device is set forth in U.S. Patent 4,961,322, and includes both a cooling mechanism and a supply of nitrogen. Oxygen levels within this device are to be controlled by the input of nitrogen and/or the use of a lighting lamp therewithin to encourage photosynthesis. Yoguma et al. patent also contemplates the use of a two-way pressure regulating means and a safety valve to ensure that pressure within the container does not exceed a predetermined level, and a discharge hole of the pressure regulating means which is to enable the drainage of water collected in the bottom of the storing volume. This device, however, is not practical for shipping large quantities of perishable goods over long distances.

Other prior art references, such as U.S. Patent 4,454,723 (which issued to G Weasel) also recognized the desirability of providing controlled atmosphere to refrigerated produce transport devices. Particularly, the Weasel reference sets forth a desirable oxygen level of between about 1 and 5%. Similarly, U.S. Patent 5,172,558 (which issued to R. Wassibauer et al.) suggests the control of oxygen, carbon dioxide, ethylene and argon gases within the storage volume of a refrigerated container by the use of initial nitrogen flushing, and, thereafter, the addition of ambient air to ensure minimal levels of oxygen, and the addition of other gases provided in the form of special containers with the device as needed. Other systems, such as may be found in cargo ships or the like, may include a nitrogen generator which provides inert gas to large cargo hold areas in which produce containers are maintained for shipping. Such arrangements, however, do not provide controlled atmosphere to individual containers, and rely on bulk handling of the potentially widely varying conditions within such containers.

As with many of the other prior devices and procedures heretofore available, this art suggests arrangements and assemblies which require relatively substantial structures and support equipment. Heretofore, there has not been available a single integral yet flexible controlled atmosphere container system which can reliably provide optimal provision of controlled atmospheric conditions within a plurality of individual and transportable containers for perishable products in a substantially uniform and predictable manner.

In addition to the above, it is generally understood that agricultural crops such as fruits and vegetables are most preferably cooled as quickly as possible after harvest to inhibit premature ripening and to otherwise minimize post harvest spoilage. Various methods for cooling fruits and vegetables following harvest include the use of large room coolers wherein the perishable products are placed and their temperature drawn down to a desired level and relative humidity, vacuum cooling (generally for leafy vegetables and the like), subjecting the products to a shower of relatively cold water, and forced air cooling such as shown in U.S. Patent 5,054,291, which issued to T.Davis et al. Generally, in these various methods for post harvest cooling, the products must be repackaged and/or otherwise removed from the cooling room or chamber for transportation and/or ripening procedures.

It has often been desirable to delay ripening of the perishable products until initial shipping had been completed, as most ripening facilities were not located in the tropics. In many cases, tropical fruit or the like was first cooled in a manner similar to that described above, then repackaged for shipment to remote markets in refrigerated shipping containers, and thereafter placed in ripening rooms for completion of the ripening process prior to final shipment to the retail market. U.S. Patent 5,041,298 which issued to G.Wallace et al., illustrates a ripening room type apparatus which includes an atmosphere controlling means for applying controlled atmosphere to appropriately stacked crates of product therewithin. As discussed in this reference, economic considerations require such ripening rooms to be of relatively large size, and Wallace et al. direct their invention to the provision of a particular frame arrangement to allow selective stacking of the crates with particular interstitial volumes therebetween for facilitating air movement for ripening procedures.

U.S. Patent 4,845,958, which issued to A.Senda et al. pertains to a refrigeration chamber which is designed to remove certain atmospheric constituents such as ethylene and nitrogen triethylamine, which have been found to cause increasingly rapid maturation, ripening and aging of perishable products. It is recognized in this reference that low temperature alone cannot prevent the further ripening of products, and means must be provided to remove or absorb elements which augment the ripening process. Senda et al. contemplate the use of adsorption materials located within a filtering mechanism for removing harmful aging substances as part of the air circulation within the chamber.

Conventionally, unripened fruit and vegetables have been shipped in refrigerated containers from shipping warehouses for freshly harvested products, and, following shipment, placed in a ripening facility for holding the products until proper maturation. In addition to the references discussed above, there is a significant amount of knowledge and prior art in the industry showing the use of controlled atmosphere arrangements for delaying ripening of product from harvest to the ripening facilities. For example, U.S. Patents 5,152,966 and 4,817,391, which issued to E. Roe et al., describe devices for producing controlled atmosphere in an area in which perishable products are held prior to desired ripening procedures. Particularly, atmospheres of reduced oxygen and lowered temperature are discussed in these references, and membrane separation technology for reducing and separating unwanted constituents of the recycled atmosphere is illustrated. U.S. Patent 4,824,685, which issued to M. Bianco, similarly describes the conventional ripening rooms wherein ethylene is dispersed at a preselected time to facilitate and speed up the ripening process. This particular reference also describes a preferred frame structure arranged within a ripening chamber to enable flow of the atmosphere through interstitial volume between rows of boxed products, and to allow more freedom in the placement and removal of palletized products into and out of the ripening chamber.

Similarly, U.S. Patent 4,764,389, which issued to L. LaBarge, discusses a method of accelerating fruit ripening and respiration by providing a continuous in-flow of air and ethylene gas in a ripening chamber. In the industry, the continuous flow of gases within a ripening chamber, such as contemplated in the LaBarge patent, is utilized for a variety of products and processes for accelerating the ripening process just prior to release of perishable products into the retail trade. For example, palletized ripening for bananas and other perishable products has been provided at ripening facilities for use with semi-trailer loads of products which are backed into modular ripening units. Particularly, ripening equipment of this type can be obtained from Modular Ripening Company, Inc., (Virginia Beach, Virginia), wherein a modular ripening facility includes a plurality of trailer docks, whereby semi-trailer loads of products are backed into the docks (with the truck doors open), and thereafter the ripening equipment provides a continuous flow of refrigerated atmosphere to the trailer to facilitate rapid ripening of the products therewithin.

A European patent application, EP 0 520 863 A1, discloses a method and apparatus that preserves fresh produce using a controlled atmosphere having a low oxygen content. Upon loading of the produce into a compartment, the controlled atmosphere maintains the oxygen content at about 2%, using a permeator. During a long-term preservation phase, a membrane-type separator lowers the oxygen content to less than 1 %, and preferably also maintains the carbon dioxide content to less than 1 %.

Another patent application, WO 91/15719, discloses a system that monitors and controls the atmosphere in containers for respiring perishable produce products. The internal content of both oxygen and carbon dioxide are monitored and controlled, and the control setpoints for these gases (and for temperature) are analyzed over time to determine whether or not they should be changed. Outside air is periodically admitted (as needed) into the containers to provide a source of oxygen and to remove carbon dioxide.

Consequently, it can be seen that many procedures and structures have been developed in an attempt to provide the ability to ship unripened perishable products from the tropics and similar harvesting locations in refrigerated and controlled atmosphere containers, thereafter unloading the containers and shipping the product to ripening facilities, implementing rapid ripening processes, and then shipping the ripe products to retail market. Problems still remain, however, in the uniform and reliable control of ripening of the products such that all products in a particular load will be delivered with consistent color, maturity, and quality. Current procedures for shipping unripened products for bulk ripening prior to retail distribution cannot provide uniform and consistent quality (e.g., fruit temperature) and ripeness (e.g., color) characteristics, and slight changes and/or problems in the transportation or delivery schedules can result in relatively costly quality control problems.

Additionally, as can be appreciated, conventional shipping, unloading, ripening, and final transportation arrangements require substantial investments of labor and capital. All of these factors also add numerous variables to the product quality control concerns, further complicating and undermining the ability to maintain consistently high quality and uniform ripeness and color characteristics of the perishable products. It often takes 10-14 days from harvest for delivery of the product to the ripener, then an additional 4-7 days for ripening and delivery of product to retail merchants. Moreover, relatively slight delays in shipping and/or delivery schedules can result in major consequences with respect to fruit quality and spoilage.

### DISCLOSURE OF THE INVENTION

It is an object of the present invention to address the above-described problems and shortcomings of the storage and shipping containers for perishable products which have been available in the industry up to this time.

It is another object of the present invention to provide an improved controlled atmosphere container system for perishable products which incorporates a central source of controlled atmospheric gas for a plurality of individual, transportable connected controlled atmospheric containers.

It is yet another object of the present invention to provide a controlled atmosphere container system which enables the selective connection of one or more modular containers to a centralized source of controlled atmospheric gas, and wherein the system is controlled so as to provide the controlled atmosphere to each of the connected containers in a relatively uniform and predictable manner in accordance with a hierarchy of priorities based upon the relative atmospheric conditions of the connected containers.

It is also an object of the present invention to provide a controlled atmosphere container system which enables the connection of a number of groups of containers for perishable products, and wherein the system can automatically adapt to the varying number of containers attached thereto and varying atmospheric conditions within the attached containers to optimally distribute controlled atmosphere gas to all containers on a predetermined hierarchy basis of priority according to the capacity of the controlled atmospheres gas source.

It is yet another object of the present invention to provide an improved controlled atmosphere container for use with the subject container system which is relatively modular in form and includes a controlled atmosphere gas input port for detachably connecting the container to a central supply source, and an automatic relief valve to ensure that pressure within the container does not exceed a predetermined maximum value.

It is also an object of the present invention to provide an improved method for the storage and shipping of perishable products in the controlled atmosphere containers and container system set forth herein in order to optimally provide controlled atmospheres to a plurality of individual, transportable containers from a central source having a predetermined capacity and in accordance with a hierarchy of priorities based upon the relative atmospheric conditions within attached containers.

It is a further object of the present invention to obviate the above-described problems and shortcomings of transportation and ripening procedures heretofore available for perishable products such as bananas and the like.

It is a yet further object of the present invention to provide an improved process for shipping and ripening fruits and vegetables from harvest to retail delivery, wherein a combination shipping and ripening container can be utilized from harvest to retail delivery for both transportation and ripening procedures.

It is also an object of the present invention to provide a method for uniformly controlling the ripening of bananas and other perishable products, wherein after stabilizing the freshly harvested products within the container at a cool holding temperature, the products are subjected to a controlled atmosphere including ethylene for a predetermined period of time to uniformly initiate the ripening process within the container.

It is yet another object of the present invention to provide a method for more uniformly controlling the ripening of bananas and other perishable products by immediately cooling the freshly harvested products to a holding temperature, and soon thereafter exposing the loaded and cooled products to ethylene for a predetermined time period in order to uniformly initiate the ripening process of all products held within the container, thereafter reducing the ethylene from the atmosphere within the container and maintaining the ripening products within a controlled atmosphere to precisely control the ripening process and speed of maturation.

It is yet another object of the present invention to provide an improved process for shipping and ripening bananas and other perishable products, wherein freshly harvested products are placed within a combination shipping and ripening container, cooled to a predetermined holding temperature, subjected to a predetermined exposure to a controlled atmosphere including ethylene to initiate uniform ripening of all products within the container, and thereafter subjected to a controlled low oxygen and low ethylene atmosphere to precisely control the product ripening and maturation process, and wherein adjustment of the controlled atmosphere and temperature within the combination container can be utilized to provide a uniformly ripened shipment of products at a relatively wider varying range of delivery dates.

In accordance with one aspect of the present invention, there is provided a controlled atmosphere container system for shipping and storing perishable products, wherein the container system includes a plurality of modular containers to be connected from time to time with a central source for providing a controlled atmosphere to attached containers. The container system preferably includes a controller which enables the container system to optimally allocate the capacity of the central source of the controlled atmosphere based upon the relative atmospheric conditions of the containers attached thereto and the capacity of the source. Such control is preferably provided with a predetermined hierarchy of priorities for allocating the controlled atmosphere gas to the individual containers. The containers themselves each preferably include a housing defining an internal storage volume for perishable products which is substantially air tight and at least one door member which can be opened for loading/unloading procedures, and, thereafter, sealed for storage and shipping procedures.

An automatic relief valve is preferably provided and includes a one-way valve member with a predetermined effective mass which is oriented such that gravity normally helps maintain the relief valve in closed position. The valve member is designed to be displaced in order to vent the atmosphere within the storage volume when pressure therewithin reaches a predetermined maximum. The container also preferably includes at least one check valve drain member having a flexible tubular sleeve which can be connected adjacent a drain hole in the floor of the storage volume, and a substantially tubular check valve insert which can be placed within the sleeve and removed from the exterior of the housing.

In a preferred arrangement, the central source for the controlled atmosphere gas includes a plurality of distribution control units which act as manifolds for directing controlled atmosphere gas to individual containers in accordance with the allocation hierarchy of the system. The system is thereby quite flexible and adaptive such that a varying number of containers having different internal atmospheric conditions can be connected to the system, and the controller proceeds in accordance with the hierarchy of priorities to allocate the controlled atmosphere gas to particular containers based upon priority needs and the overall capacity of the system.

In accordance with another aspect of the present invention, there is provided a method for uniformly controlling the ripening of bananas and other perishable products from harvest to delivery, including the steps of providing a combination shipping and ripening container having an internal volume capable of receiving and maintaining a controlled atmosphere. Freshly harvested, unripened perishable products are loaded into the container and cooled to a holding temperature in a range of from about 13.9° to about 21.1°C (about 57° to about 70°F). Once the products are stabilized at the desired holding temperature, a control atmosphere including ethylene is preferably substantially immediately provided to the internal volume to uniformly initiate ripening of all of the loaded products. Thereafter, the ethylene is substantially displaced from the internal volume by a low oxygen controlled atmosphere, which is maintained within the container during storage, transportation, and delivery procedures. Prior to unloading the ripened products from the container, the atmosphere within the internal volume is returned to normal conditions. Additionally, once the loaded products have been stabilized at the desired holding temperature and exposed to the ethylene atmosphere to initiate ripening procedures, adjustments to the controlled atmosphere and temperature within the internal volume can be utilized to "tune" the ripening process as desired to provide ripened products for delivery within a range of timing schedules.

### BRIEF DESCRIPTION OF THE DRAWINGS

While the specification concludes with claims particularly pointing out and distinctly claiming the present invention, it is believed the same will be better understood from the following description taken in conjunction with the accompanying drawings in which:
Figure 1 is a partial schematic illustration of a controlled atmosphere container system made in accordance with the present invention;
Figure 2 is an elevational view of a preferred automatic relief valve arrangement of the container of the present invention as illustrated in Figure 1;
Figure 3 is a top plan view of the automatic relief valve of Figure 2;
Figure 4 is an enlarged cross-sectional view of a preferred one-way valve member assembly for the relief valve arrangement of Figs 2 and 3;
Figure 5 is an enlarged cross-sectional view of a preferred check valve drain assembly as illustrated in Figure 1;
Figure 6 is a partial top plan view of the drain assembly of Figure 5;
Figure 7 is a bottom plan view of the drain assembly of Figure 5;
Figures 8A and 8B illustrate a schematic flow diagram of a preferred control mode hierarchy of the controller of the present invention;
Figure 9 is a schematic illustration of an embodiment of the controlled atmosphere container system of the present invention as it might be installed in the cargo hold of a ship; and
Figure 10 is a schematic view of a preferred combination shipping and ripening container which can be utilized to implement the improved process of the present invention.

### DETAILED DESCRIPTION OF THE INVENTION

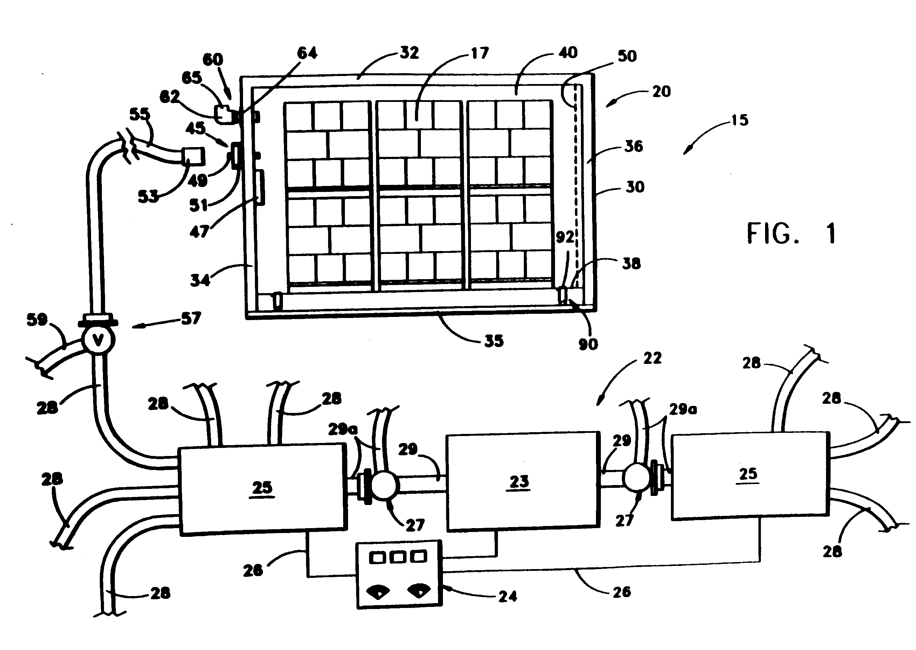

Referring now to the drawings in detail, wherein like numerals indicate the same elements throughout the views, Figure 1 shows, in schematic form, a preferred arrangement of a controlled atmosphere container system 15 made in accordance with the present invention. Particularly, container system 15 is shown as including one or more modular individual container for receiving and storing perishable products (e.g., product filled boxes 17) shown within a storage volume 40 therewithin. Container 20 comprises a housing or frame 30 having a series of interconnected and spaced top (32), side (34) and bottom (35) walls, and reciprocable door arrangement or member 36.

A storage volume 40 is defined by the top and side walls 32 and 34, door member 36, and the interior floor member 38. As will be understood, it is preferred that storage volume 40 be provided as a substantially air-tight space. To prevent substantial leakage into storage volume 40, it is preferred that the connections between the adjacent walls of housing 30 and floor member 38 be carefully connected and sealed such as by welding, brazing, caulking, and/or with other gaskets and/or sealing arrangements. Cargo structures similar to the modular container 20 illustrated can be obtained from varying sources in the industry (such as from Nippon Freuhauf of Atsugi, Japan) and can be provided with additional leak-tight features as necessary.

It may also be preferred to incorporate a sealing curtain (e.g., 50) mounted adjacent the inside of door 36 to reduce leakage therethrough. Such sealing curtains are often used in controlled atmosphere storage devices, and are well known in the industry. It will also be understood that a certain minimal leakage of ambient air into container 20 will be expected, and will be preferred in most cases, to allow a minimum in-flow of oxygen in use. In substantially air-tight arrangements, it may even be important to design into the system a predetermined amount of leakage, such as by an adjustable vent or the like, to facilitate uniform and reliable in-flow of oxygen and out-flow of CO₂, and to prevent anaerobic conditions in fruit containers.

Side or end wall 34 is also illustrated as being fined with a quick connect/disconnect controlled atmosphere gas input port 45 which will detachably and selectively provide fluid connection between storage volume 40 and a source (e.g., 22) of the controlled atmosphere, which will most preferably be provided in the form of a gas. Input port 45 is illustrated as including a male connection 49 fitted through the bulkhead of side wall 34, preferably with a security cover/connection adapter 51 mounted adjacent the exterior portion of side wall 34. A flexible hose supply line 55 is illustrated as including a female quick connect coupler 53 at its distal end for detachable and selective connection with container 20. Obviously, the male/female order described could equally be reversed if desired. As will be understood, when container 20 is connected to a central source of controlled atmosphere gas (e.g., 22), input port 45 will be appropriately connected to a respective supply line (e.g., 55).

Container 20 is also illustrated as optionally including an internally mounted atmospheric monitoring means, which can also include a wiring harness or similar detachable connection which can be selectively attached to one or more distribution control unit (e.g., 25) and/or the controller (e.g., 24) of a central controlled atmosphere source (22) of the present invention, as will be described in more detail below. Such monitoring means can include various sensors for constituents of the controlled atmosphere within container 20, such as oxygen, carbon dioxide, ethylene, and the like. In some applications of the present invention, the means for monitoring the atmospheric condition within storage volume 40 may also comprise temperature and pressure sensors, and/or a signalling device to indicate to the controller of the controlled atmosphere source, information such as the time of connection/disconnection of a particular container, current atmospheric conditions, and the like.

In a more sophisticated embodiment of the present invention, it may be preferred that the relative atmospheric conditions of the individual containers connected to the central station be determined for implementation of the hierarchal priority system of the present invention. While the use of accurate sensors may be available in some arrangements, more simplified means of generally determining the relative atmospheric conditions may be preferred, such as time of connection monitoring arrangements or the like. For example, a mobile or hand-held atmospheric measuring device might be selectively attached to a sampling port or an auxiliary branch (not shown) of the input port 45 arrangement, a built-in sensing apparatus with an external display device for selective or constant monitoring might be included, or means for automatically drawing samples of the internal atmosphere for remote testing could alternatively be employed depending on the level of sophistication and automation desired.

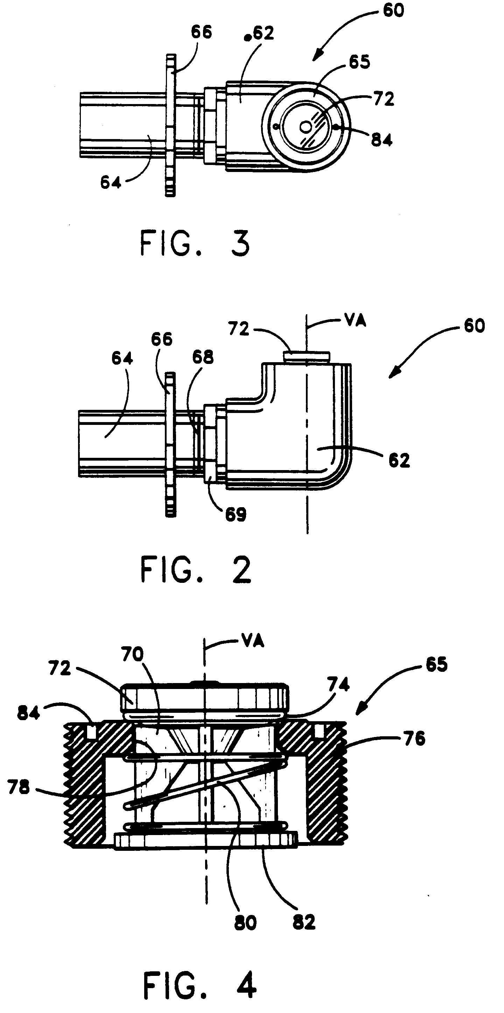

As also illustrated in Figure 1, a preferred container 20 will also include an automatic relief valve 60 for providing venting between storage volume 40 and the ambient atmosphere. As best seen in Figures 2-4, a preferred automatic relief valve 60 comprises an L-shaped conduit or pipe 62 attached to the outer distal end of a threaded nipple or pipe 64 welded or otherwise attached through the bulkhead of side wall 34. As illustrated, pipe 62 might preferably comprise a plastic pipe or the like having a connector 69 which can be threadedly secured onto the distal end 68 of pipe 64. A pressure relief valve 65 is located within the upper open end of pipe 62, and is illustrated with an externally threaded valve body 76 having a vent opening 78 and an upper valve seat 74 within which is located reciprocable valve member 70.

Valve member 70 preferably comprises a predetermined mass specifically designed such that when oriented in a substantially vertical manner, the mass of valve member 70 will help resist upward movement until pressure within storage volume 40 of the container reaches a predetermined maximum (or cracking) pressure. Until that predetermined pressure is reached, the seat flange 72 of valve member 70 will remain in sealing contact upon valve seat 74 to maintain relief valve 60 in closed condition. A biasing member such as spring 80 is also preferred to insure that venting resistance is uniformly maintained and to facilitate the return of valve member 70 to its closed condition as quickly as possible following a venting procedure. Once the excess pressure within storage volume 40 is relieved, it is imperative that the valve close securely and immediately to prevent unwanted inflow of ambient air, which could adversely affect the controlled atmosphere within the container.

Relief valve 65 is further shown as including a lower retainer lug 82 on valve member 70 to ultimately limit the longitudinal movement thereof during venting procedures, thereby limiting the maximum venting flow rate as well. The relative sizes of the individual members of relief valve 60, as well as the orientation of and weight or mass of valve member 70 and the free length and tension of biasing spring 80 can be adjusted to provide a valve arrangement having an effective mass to accommodate critical flow rates needed for venting and to protect the gas-tight integrity of container 20, while maintaining the controlled atmosphere therewithin. The procedures and equations for determining the valve coefficient, flow rates, and the like are known to those skilled in the valving industry and will not be included herein accordingly. As seen best in Figure 4, one or more tool recesses 84 may also be provided in valve body 76 to facilitate the insertion and/or removal of relief valve 65 from its adapter (e.g., pipe 62). Similarly, pipe 64 is shown as including an attachment flange 66 to facilitate welding or other attachment to the bulkhead of container 20.

As mentioned above, and as shown in Figures 1, 2, and 4, because gravity is a factor relied upon to act on the mass of valve member 70 in order to help maintain relief valve 65 in its normally closed condition, it is important that relief valve 65 be oriented in a substantially vertical condition. While absolute vertical orientation is not critical, it is important that valve member 70 be aligned for longitudinal reciprocation along an axis (VA) which is substantially perpendicular to the ground in normal storage or shipping conditions of container 20. By utilizing the gravitational forces in this way, relief valve assembly 60 is less dependent upon relative pressure differentials and the possibly changing biasing characteristics of spring 80, and more precise control of the absolute pressure within container 20 is provided in use.

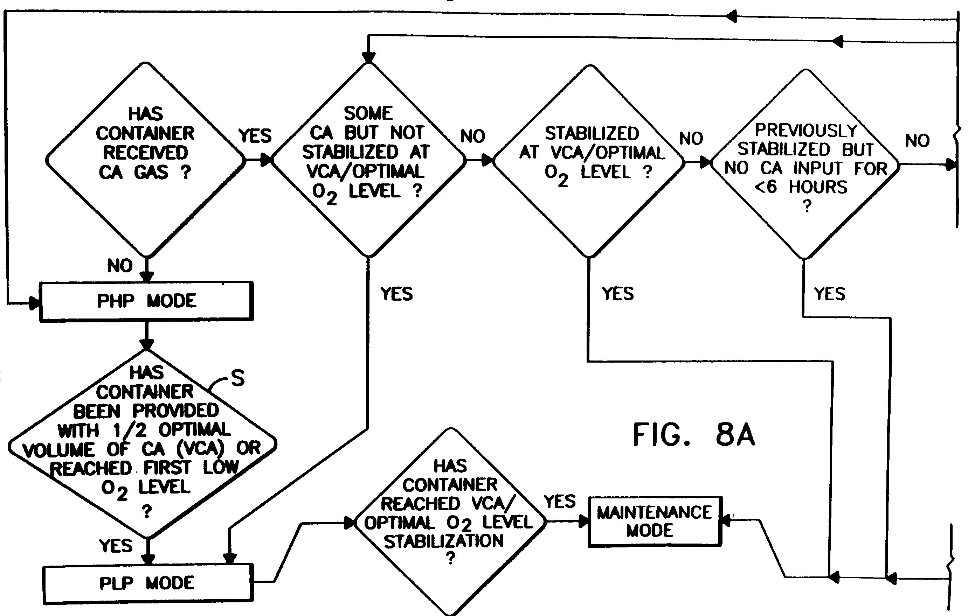

As best illustrated in Figures 1 and 5-7, container 20 also preferably includes one or more check valve drain assemblies (e.g., 90) located adjacent floor 38 to enable fluids such as condensation and the like to be drained from storage volume 40. Particularly, with respect to products such as fruits and vegetables, which often produce condensation as a result of continued respiration, it is important to provide a means for releasing collected fluid from within volume 40 to protect the product and to maintain optimal atmospheric conditions therewithin. Shipping containers commonly available in the industry generally include one or more drain holes, often having a downwardly extending drain pipe (e.g., 92) attached such as by welding or threading through the floor member 38. While check valves have been known for use with drain pipes and the like, a common problem has been in properly fitting check valve assemblies into drain pipes of varying dimensions for the variety of shipping containers heretofore available. It is also difficult and inconvenient to maintain check valve assemblies in operable condition when they must be inserted and accessed from within the container. Check valve assembly 90 made in accordance herewith, however, overcomes these objections by enabling the connection and maintenance of the check drain valve from the exterior of container 20.

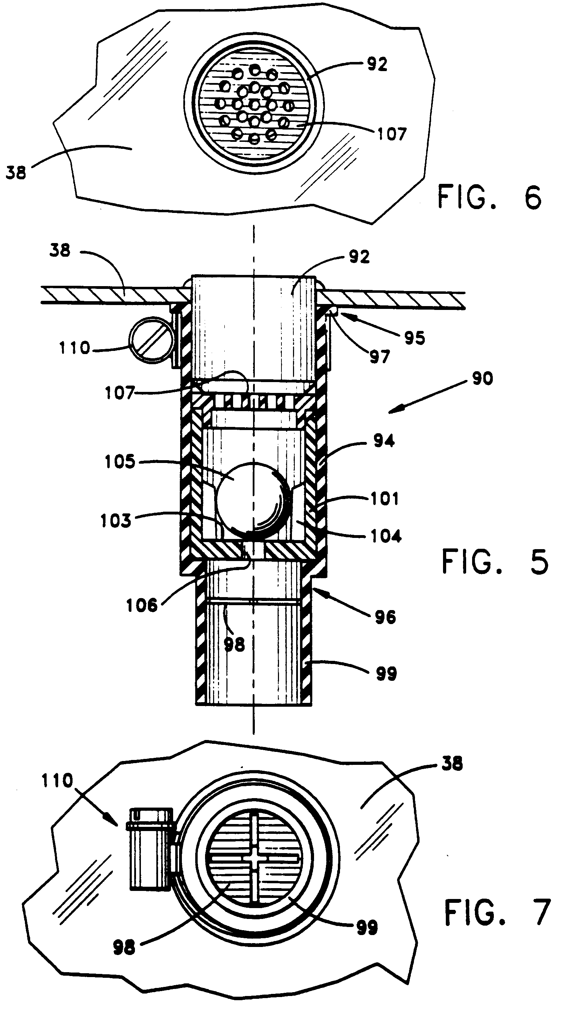

As best seen in Figure 5, check valve assembly 90 preferably comprises a substantially tubular, flexible sleeve 94 having a top portion 95 and a bottom portion 96. A flange 97 may be provided adjacent top portion 95 to further facilitate attachment procedures. Particularly, it is contemplated that flexible sleeve 94 will be slidably telescoped over the downwardly depending portion of drain pipe 92 below floor member 38. As seen in Figure 1, floor 38 is often recessed within housing 30, and above bottom wall 35 thereof. Access to the lower portion of drain pipe 92 from the exterior of container 20 is substantially available at all times, thereby facilitating the attachment to and maintenance of check valve assembly 90 from outside container 20. A constricting type attachment ring 110 is illustrated as a convenient mode of detachably securing sleeve 94 to drain pipe 92.

Concentrically fitted within flexible sleeve 94 is a removable, substantially hollow tubular insert 101 having a valve seat 103, a drain opening 106, several guide ribs 104, and a ball valve 105 therewithin. Ribs 104 are preferably provided to space ball valve 105 inwardly from the inner surfaces of insert 101, and to help guide ball valve 105 therewithin in use. Optionally, insert 101 may also include a perforated cover 107 to prevent dirt or other extraneous material from interfering with proper operation of the ball valve arrangement. As will also be appreciated, the bottom portion of flexible sleeve 94 can also be provided with an apertured, flexible membrane 98 therewithin. While membrane 98 is optional, it is preferred to provide additional protection of the one-way drain valve insert from ambient conditions such as dirt, wind, rain, ice, and the like. The flexible, apertured nature of membrane 98 enables insertion and removal of the insert 101 as needed, while providing a protective buffer from the surrounding environment.

It may also be preferred to provide bottom portion 96 of assembly 90 with an extended flexible "kazoo" member to further isolate insert 101 from potentially adverse conditions. The flexible extension 99 can also help prevent the buildup of ice or grime as a result of its flexible nature, thereby helping to maintain check valve assembly 90 in operable condition at all times. While sleeve 94 and insert 101 have been illustrated as substantially cylindrical structures, such is not critical and can be modified as desired.

Returning to the illustration of Figure 1, central source 22 of controlled atmosphere gas preferably comprises one or more gas generators or sources 23 (e.g., a membrane type nitrogen generator or the like) for providing the controlled atmosphere gases as needed to connected containers. Central source 22 will, of course, have a predetermined gas output capacity. A controller (e.g., 24) is most preferably provided to interact with the controlled atmosphere gas source(s) 23 and one or more distribution control units or manifolds 25. As known in the industry, controlled atmosphere source 23 may preferably include devices for extracting oxygen from ambient air to increase the relative percentage of other constituents such as nitrogen. Membrane type devices are available in the industry in a variety of forms, and generally compress the ambient air and pass it through a special membrane which is permeable to oxygen but less permeable to nitrogen and/or other gases which are to be collected. The oxygen rich permeate is vented to the ambient, while the nitrogen rich remaining gases are collected for distribution as the controlled atmosphere for containers attached to the system. It will be understood that source 23 could alternately comprise, for example, a tank of liquid nitrogen, or incorporate pressure swing absorption/molecular sieve technology.

Distribution control unit 25 preferably comprises a manifold for selectively directing controlled atmosphere gas from gas generator 23 and gas buffer or supply lines 29, through pressure regulator valve 27 and supply lines 29a, to individual containers 20 attached to that particular control unit 25. As illustrated, a number of supply lines 29a can radiate from the regulator valve 27, thereby ensuring uniform supply pressure throughout the system. Each distribution control unit 25 also includes a manifold system diverting the controlled atmosphere gas from supply line 29 to the individual distribution lines 28, which, in turn are selectively attached to an individual controlled atmosphere container 20, as seen in Figure 1. Distribution control unit 25 may be used by itself (i.e., without other control units 25 and controller 24) to control the distribution of atmosphere to a plurality of containers, which may be divided into a plurality of distinct zones. Distribution lines 28 may be relatively rigid and/or permanently installed and arranged in a storage or shipping yard, or in the cargo hold of an airplane, ship, or other transportation vehicle. Individual valving/shut off assemblies (e.g., 57) are also preferably provided for each distribution line 28 for additional automatic and/or manual control of the controlled atmosphere gas.

In a preferred arrangement, a controller 24 may be connected with each distribution control unit 25, such as by interactive data lines 26, for precisely monitoring the distribution and allocation of controlled atmosphere gases from central source 22 to containers attached thereto. It is contemplated that controller 24 may a comprise an interactive control console such as a keyboard or other input device to allow instructions to be entered either in the form of manual signals and/or pre-programmed control instructions. In this regard, a controller board, computer controller, or similar device will preferably be provided as part of controller 24, into which operational instructions can be entered.

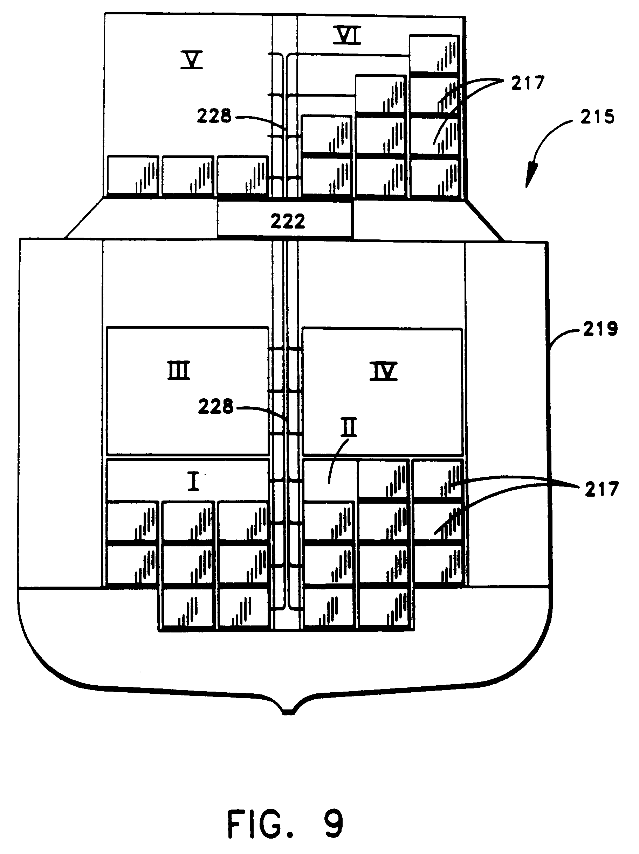

In any particular storage or transportation facility, it is contemplated that one or more zones (e.g., zones I, II, etc. illustrated in Figure 9) will be designated into which a plurality of containers 20 will be placed for connection to a central source 22 of controlled atmosphere gas will be provided, with each such zone having at least one distribution control unit 25 associated therewith. For example, the schematic illustration of Figure 1 shows portions of a container system 15 having at least one zone with a pair of distribution control units 25 associated therewith. Generally, there will be only a single distribution control unit 25 for each zone of a facility.

It is contemplated that each distribution control unit 25 would have a predetermined number (e.g., 25-30) of hook-ups or distribution lines 28 associated therewith. While generally all of the hook-ups would be utilized to maximize capacity, as mentioned above, unused hookups can be closed off via the individual shutoff valve 57 as needed, either manually and/or automatically depending on the application. It is also contemplated that interactive feedback between a distribution control unit 25 and connected containers of the system may be desired to monitor the exact number of containers connected to any particular distribution control unit 25 at any given time, and/or to monitor the relative internal atmospheric conditions of such containers. One advantage of the present system is its adaptability to ensure optimal distribution of the controlled atmosphere gases within the capacity of central source 22 at all times. Where a number of control units 25 are connected to a single central source, it is also preferred to provide a controller 24 or other device which enables interactive communication between the control units 25 to ensure most optimal use of the capacity of a central source (e.g., 22).

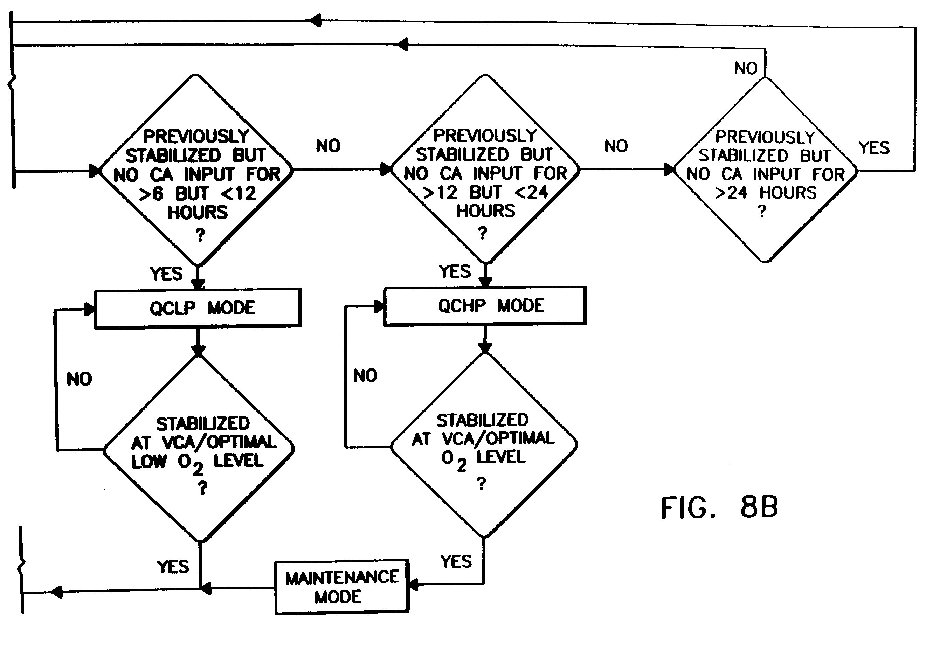

It is further contemplated that one or more predetermined subroutines or gas charging control modes will be preprogrammed into container system 15 and associated with one or more distribution control unit 25. `The control program can be provided as part of control unit 25, and, in more sophisticated arrangements, may be resident in controller 24 which can act as a supervisor of a plurality of distribution control units 25. Because containers having differing internal atmosphere conditions will require different amounts of controlled atmosphere (CA) gases for optimal storage and shipping conditions, the system is designed to accommodate, and adapt to, these changing and variable needs to optimize the provision of CA gas to all containers connected to the system. In order to achieve a practical system for controlling the amount and flow rate of CA gas supplied to each particular zone and/or to individual containers based upon the relative internal temperature and atmospheric state of those containers, the subroutines of the present invention are broken down into a plurality of predefined operating or control modes. Particularly, these control modes preferably comprise a pull down high priority mode (PHP), a pull down low priority mode (PLP), a quick cycle high priority mode (QCHP), a quick cycle low priority mode (QCLP), and a maintenance mode. A preferred control and priority scheme for implementing these modes is illustrated in the flow diagram of Figures 8A and 8B, as will be described.

In one preferred arrangement, these particular modes are each associated with a predetermined flow rate and quantity of CA gas to be provided to each individual container in that mode for a particular product (e.g., bananas). For example, pull down modes are intended to respond to containers which are "fresh cut" or which have previously received little or no controlled atmosphere gas. A pull down mode may also be appropriate for containers which had previously been stabilized in an optimum controlled atmosphere condition, but which have been disconnected from the source of controlled atmosphere gas for an extended period of time. Containers which, based upon their internal atmospheric conditions and temperature, require pull down mode quantities of CA gas, will be provided with a predetermined volume of CA gas mixture as part of an initial control program (e.g. 70.791 m³ (2500 Standard Cubic Feet) (SCF) per container). The specific volume and flow rate of controlled atmosphere gas will, of course, depend upon, among other variables, the gas mixture, the specifics of the perishable products within the container, leak rate of the container itself, and the container volume. The modes can be manually implemented through the distribution control unit 25 or a controller 24, or might be automatically initiated by the program, depending on the application and sophistication of the system.

Under a preferred program of the present invention, the logic of the system can be followed starting at decision block S of Figure 8A. Once a container has received one half of its total allotment of CA gas in the PHP control mode, the status for that container will automatically be downgraded to the PLP mode. This downgrade helps to liberate capacity for servicing other containers and/or zones of the system. Once the container has received its entire complement of CA gas for the pull down mode and has been stabilized at the optimal controlled atmosphere level (e.g., at the optimal O₂ level of about 2-10%), the PLP mode will be downgraded to maintenance mode. In the maintenance mode, the containers receive short bursts of CA gas as needed (e.g. in the simplest application, at predetermined time intervals). For example, once the container has been stabilized at its optimum controlled atmosphere, maintenance of that atmosphere can be achieved by periodic short bursts of CA gas sufficient to replace small amounts of oxygen utilized in respiration and/or nitrogen lost to leakage and the like. The volume and frequency of such bursts (e.g., 30 SCF per hour) can be preprogrammed based upon the particular application.

The quick cycle mode is intended for product containers which have previously been treated with controlled atmosphere gas to the point of stabilization at optimal levels, but which have not been maintained by additional CA gas input. During periods in which controlled atmosphere is not being added to a container, leakage of air into the containers through door seals and the like, as well as product respiration, will change the oxygen percentage of the atmosphere within volume 40. It is generally preferred to maintain the oxygen level for fruits such as bananas at between about 2% and 8%. If a container is treated with CA gas and stabilized at a shoreside terminal yard or on board a transportation vehicle (such as a ship, train, plane or the like), it is often required to disconnect the container for movement between the ship and loading dock or vice versa. Some loading/transportation facilities do not have sufficient capacity central sources and/or controlled atmosphere gas hook ups available immediately, and the containers will remain disconnected and/or with insufficient atmosphere supply for a period of time, often ranging between several hours and several days.

In an example of the present invention for bananas, the initial control program is preferably set to initiate a QCHP mode if the container has not received CA gas input for between about 12 and 24 hours and a controlled input of CA gas might comprise approximately 11.33 m³ (400 SCF) per container (for a standard size banana container). If the container was previously stabilized and disconnected for between about 6 and 12 hours, the QCLP mode is initiated, wherein a lesser amount (e.g. 5.665 m³ (200 SCF)) of gas is provided for each container. Thereafter, the containers will be downgraded to a maintenance mode as shown in Figures 8A and 8B. As illustrated in the flow diagram, if the container has not had CA gas input for more than 24 hours following stabilization, the container will be placed in a PHP mode to quickly reestablish the controlled atmosphere therewithin. An exemplary hierarchy for priority of implementation of the control modes within the capacity of a system is as follows:
1st priority - quick cycle high priority (QCHP)
2nd highest priority - pull down high priority (PHP)
3rd highest priority - pull down low priority (PLP)
4th highest priority - quick cycle low priority (QCLP)
5th highest priority - maintenance

By monitoring the control mode of particular zones and/or of individual containers, the system (e.g., distribution control unit 25 and/or controller 24) can establish and implement the priority system for supplying the available CA gas from central source 22 in the most optimal manner. Consequently, containers connected to a particular central system 22 will be provided with CA gas within the bounds of the capacity of the system and based upon a hierarchy of priority automatically implemented by the control program in response to atmospheric conditions within the individual containers. Of course, additional control modes can be added, and the priority status of any particular mode can also be changed to adapt the system to a variety of applications and products.

Different products will, of course, have differing rates of respiration and other characteristics which may require different atmospheric conditions. These variables may alter the number and characteristics of the chosen control modes, and/or modify the priority choices of the hierarchy system. Accordingly, the central source (e.g., 22) may preferably be provided with several optional control programs for use with different applications (e.g. for different products, different containers, different environmental conditions, etc.). The adaptive characteristics of the present invention enable its virtually unlimited applicability to differing products and shipping/storage conditions. When fully automated, it is contemplated that the system can be effectively automatically adaptive, in an artificial intelligence manner, to react to changing conditions and needs "on the fly".

As mentioned above, the present invention can be implemented in a variety of applications, including product storage areas, shipyard container holding areas, cargo holds of ships, airplanes, and the like, and/or distribution or ripening facilities. An example of implementation of a controlled atmosphere container system 215 made in accordance with the present invention is illustrated in Figure 9, wherein a plurality of perishable product containers 217 are loaded into the cargo hold of a ship 219. As an example, six separate zones (e.g., I-VI) are indicated within the upper and lower cargo hold areas of ship 219, for connection to a central source 222 of CA gas. The central portion of the cargo hold is contemplated as remaining clear for permanent mounting of the controlled atmosphere distribution lines 228 from distribution control units of source 222, which would similarly include flex hose connectors and quick connect coupling assemblies (not shown) as described above with respect to Figure 1. Application and installation of the container system of the present invention could also be adapted to cargo transport airplanes, train cars, trucks, and the like in a similar manner.

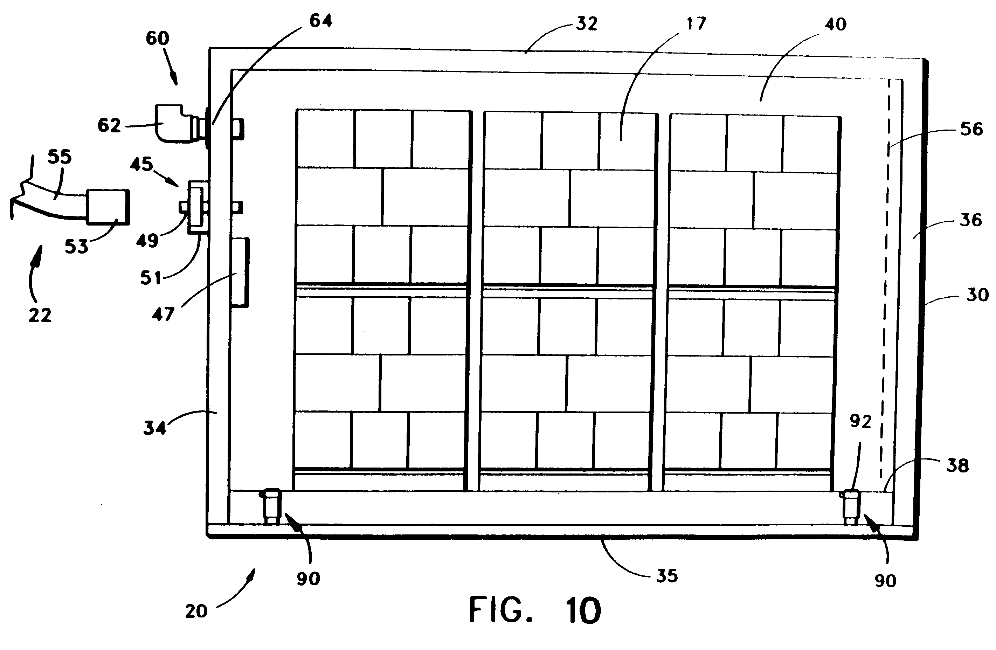

Referring now to Figure 10 in detail, the modular individual container 20 is again illustrated for receiving and storing perishable products (e.g., product filled boxes 17) shown within storage volume 40 therewithin. Container 20 is used as a combination shipping and ripening container, and as mentioned above, the perishable products can be bananas or any other perishable fruit or vegetable. Container 20 is constructed according to the preferred examples, described hereinabove.

Container 20 is also illustrated as optionally including an internally mounted atmospheric monitoring means (47), which can also include a wiring harness or similar detachable connection which can be selectively attached to controlled atmosphere source (e.g., 22). Such monitoring means can include various sensors for monitoring particular constituents of the controlled atmosphere within container 20, as described hereinabove. Container 20 may include its own self-contained source of controlled atmosphere, or, more preferably, may be selectively attachable to a centralized source of controlled atmosphere (e.g., 22) by quick disconnect type arrangements (e.g., 45).

In a more sophisticated embodiment of the present invention, it may be preferred that the relative atmospheric conditions of the individual containers connected to the central station be determined for appropriate implementation of a hierarchal priority system by a controller or similar device associated with the source of controlled atmosphere, as described hereinabove.

As illustrated in Figure 10, container 20 preferably will also include an automatic relief valve 60 for providing venting between storage volume 40 and the ambient atmosphere. An automatic pressure relief valve assembly can be located within the upper open end of pipe 62, so that upon reaching a predetermined maximum, atmosphere within internal volume 40 can be vented to ambient. As also shown in Figure 10, a sealing curtain (56) may be installed after products are loaded into container 20 to augment the seal adjacent door 36 once loaded with products.

As also illustrated in Figure 10, container 20 preferably includes one or more check valve drain assemblies (e.g., 90) located adjacent floor 38 to enable fluids such as condensation and the like to be drained from storage volume 40. A preferred check valve might include a flexible tubular sleeve which can be attached to the lower portion of drain pipe 92 from below floor member 38, with such tubular sleeve receiving and housing a valve seat and ball valve arrangement for providing a reliable one-way check valve drain which can be connected and maintained from the exterior of container 20. Further details of a preferred check valve assembly 90 are described hereinabove.

The method of the present invention contemplates that bananas or other perishable products will be loaded into boxes upon harvesting, and properly stacked on pallets for facilitating shipping procedures or break bulk packed into a designated portion of a ship hold or the like. As illustrated in Figure 10, a plurality of boxes 17 are generally loaded on a pallet for easy movement by forklift or the like, and a plurality of pallets are stacked upon one another within container 20. It is contemplated that freshly harvested, unripened products will be loaded into the combination shipping and ripening container 20 or other break bulk container as soon as possible following harvest. Once the container is fully loaded with freshly harvested product, the internal volume 40 is cooled to a holding temperature in a preferred range of about 13.9° to about 21.1°C (about 57° to about 70°F). For example, the most desirable holding temperature for bananas is generally 14.4° - 15.7°C (58° - 60° F). Internal volume 40 and the products held therewithin are stabilized at the desired holding temperature as quickly as possible following harvest to best preserve the freshness and quality of the products.

Once the products within the internal volume 40 are stabilized at the desired holding temperature, it is preferred that the products be substantially immediately exposed to ethylene gas (e.g., about 150 ppm ethylene mixture) in order to uniformly initiate the ripening of all of the loaded products in the container. It has been found that in transportation arrangements utilized heretofore for bananas and the like, products within a shipping container will naturally begin to ripen at varying rates, even where the internal temperature and atmosphere of the container is controlled prior to ripening procedures. For example, it is a fact that carbon dioxide is generally a denser gas than other constituents of air (e.g., oxygen), and that higher concentrations of CO₂ in the lower portions of a container can cause products in the upper regions of the container to ripen in a manner which causes the quality, color, and ripeness characteristics of the load of products to vary widely. Similarly, failure to provide for sufficient temperature control of products located remote from the air conditioning source can also allow non-uniform ripening. Since freshness and uniformity of color and temperature characteristics are critical to suppliers of perishable products, the shortcomings of the prior art in this respect are sometimes devastating to quality control concerns.

It should also be recognized that shipping containers for bananas and other perishable products generally are provided with refrigeration equipment to maintain the internal volume at a lowered temperature. It has been found that shipping containers used for bananas and other fruit products generally do not have the refrigeration capacity to handle the heat load resulting within the container from normal ripening of the products therewithin. Particularly, respiration of ripening fruit provides heat as a byproduct, and the temperature within internal volume 40 rises at an increasing rate as ripening proceeds. As a consequence, shippers of bananas and other perishable products often have been forced to ship less than fill container loads of products in order to accommodate for the inevitable heat load increase therewithin, and to provide additional void space to aid in air circulation. Sufficient air circulation is quite important during ripening procedures, to ensure that proper levels of oxygen are maintained for aerobic ripening. The alternative to reduced capacity shipping was to ensure that ripening did not commence until transportation to the ripening facilities was completed. However, as discussed above, when ripening is delayed for what can be several weeks from harvest, quality characteristics, color, and maturity of any particular load of products is usually widely variable even under the best controlled atmospheric conditions of transportation.

According to the ripening method of the present invention, after the freshly harvested products are loaded into the container and stabilized at the desired holding temperature, the products are exposed to an atmosphere including ethylene to uniformly initiate the ripening process of all products within the container. This ethylene initiation can be accomplished at the loading facility, or may be delayed for several days if the ethylene source is not available at the point of harvesting and loading the products. In such case, it is contemplated that a controlled low oxygen atmosphere (e.g., 3-5% oxygen, and 97-95% nitrogen) would be provided to internal volume 40 to suppress the ripening process until uniform exposure to the ethylene gas. It is preferred that the products be exposed to ethylene for 1-2 days to ensure uniform initiation of the ripening process for all products within the container.

Once the ripening process has been uniformly commenced, it is preferred that the level of ethylene gas be greatly reduced (total elimination is virtually impossible) within internal volume 40 and displaced with a low oxygen inert atmosphere to minimize the ripening process during shipping and transportation procedures. It has been found that by providing a controlled internal atmosphere at about 14.4°C (58° F) and approximately 5% oxygen (95% N₂), a fully loaded container can easily accommodate the resulting heat load of the uniformly ripening products therewithin without a need for augmentation or supplementation of the refrigeration equipment normally provided with shipping containers. As mentioned above, while each container might include its own source of controlled atmosphere gases, it is preferred that the containers be selectively attachable to a central source of controlled atmosphere so that capital expenses for the individual containers can be minimized. By uniformly initiating the ripening process for all products within the container soon after harvest, it has been found that the wide range of normal ripening of products within a loaded container is minimized, and color, maturity and freshness quality is maintained on a more consistent and reliable basis.

The fully loaded shipping and ripening container 20 can thereafter be transported via ship, train, airplane, or other mode of transportation to its retail distribution destination without a need for the usual stop off at the ripening facility. So long as the controlled atmosphere is appropriately maintained within the container during storage, transportation and delivery procedures, the ripening process can be controlled within internal volume 40 on a very reliable basis. In this way, delivery scheduling can be made more reliable, and additional tolerance for changing market needs and delivery problems can be accommodated. For example, if the products within a particular container are required sooner than originally planned, the temperature and/or atmosphere within the container can be modified to speed up the ripening process. For example, the temperature might be raised from 14.4°C to 21.1 - 23.8°C (58°F to 70 - 75 °F) and/or the oxygen level within the container might be raised to appropriately speed up the ripening process. Conversely, if delivery of the products were to be held off for a number of days for whatever reason, the products could be maintained within the low oxygen, cooled temperature controlled atmosphere for a longer period of time than originally planned.

As the delivery date for the products approaches, the controlled atmosphere within container 20 can be replaced with normal atmospheric conditions, and the product can be unloaded from the container as desired. As will be appreciated, the method of the present invention enables full container loads to be shipped directly from harvester to retailer without a need for repetitious unloading and loading from transportation containers to ripening facilities, to other transportation carriers, to retailers. It has been found that utilization of the ripening process of the present invention does indeed result in reliably uniform and consistent ripeness, color, and freshness quality. Moreover, the capital costs, time requirements, labor requirements and unpredictability of ripening facilities can be obviated by the present invention, and suppliers of perishable products can be assured of more consistent and reliable quality with the added benefit of greater tolerance of changing delivery schedules and product demands.

It is believed that implementation of the present invention can also provide access to markets previously unaccessible by certain perishable products. Particularly, the lack of available infrastructure (e.g., ripening, storage, and transportation facilities) and/or capital investment for providing such infrastructure can be largely overcome by implementation of the present invention. Without a need for the expensive and cumbersome ripening facilities and the like, or expensive additional cooling capacity for shipping containers, it is believed that additional markets and geographic areas can be serviced in a cost effective and practical manner. Even where this infrastructure is available the present method can reduce the fruit age at retail market by the 4-7 day time period conventionally needed for ripening after shipping. The nearly one-third reduction in age also allows for better freshness and overall quality of the ripened products.

The container of the present invention can be provided in the form of a portion of the hold of a ship or similar transportation vehicle for break bulk transportation. The products would be loaded directly from harvest into the cargo hold, cooled, then ripened in transit as described above for delivery at the destination port in uniformly ripe condition.

It will, of course, be understood that the present invention has been described above purely by way of example, and modifications of detail can be made within the scope of the invention.

## Claims

1. A controlled atmosphere container system (15) for shipping and storing perishable products such as fruit and vegetables, wherein said container system comprises a plurality of individual, transportable containers (20) to be connected from time to time with a central source (23) for providing a controlled atmosphere to connected containers, said system further comprising in combination:
- a central source of controlled atmosphere (23) to be supplied to one or more containers (20);
- each container (20) further comprising a housing (30) defining a storage volume (40) for perishable products which is substantially air tight, at least one door member (36) which can be opened for loading/unloading procedures and sealed for storage and shipping procedures, and an input port (45) on said housing for detachably and selectively providing fluid connection (55) between said storage volume and said central source for providing a controlled atmosphere thereto; and
- a distribution control unit (25) having means for controlling (24) the distribution of said controlled atmosphere from said central source (23) to one or more connected containers (20) in accordance with a predetermined supply control program, said supply control program including subroutines for implementing a plurality of predetermined control modes, including at least two of Pull-Down High Priority Mode, Pull-Down Low Priority Mode, Maintenance Mode, Quick Cycle Low Priority Mode, and Quick Cycle High Priority Mode.

2. The container system of claim 1, wherein said container further comprises a floor (38) within said storage volume (40) and said housing (30) for supporting perishable products, and at least one check valve drain member (90) located adjacent a corresponding drain hole in said floor (38) to enable fluids such as condensation and the like to be drained from said storage volume, said drain member (90) further comprising a flexible tubular sleeve member (94) to be connected adjacent a drain hole in said floor (38), and a substantially tubular check valve insert (101) including a valve seat (103), a valve opening (106) in said seat, and a floatation ball (105) within said insert (101) and normally seated on said seat closing said opening, whereby said insert (101) can be inserted and removed from said sleeve (94) from below said floor.

3. The container system of claim 1 wherein said subroutines of the supply control program include a hierarchy for selectively implementing particular control modes for optimally providing controlled atmosphere from said central source (23) to a plurality of individual containers (20) attached thereto in accordance with the capacity of said central source (23) and the relative atmospheric conditions within said attached containers (20).

4. The container system of claim 3 wherein a plurality of controlling means (25) are interactively connected with one another to optimally provide controlled atmosphere to the plurality of containers (20) attached to each of said controlling means from a single central source (23).

5. The container system of claim 3. wherein said controlling means (25) comprises predetermined control modes to manage optimum initial pull down of atmospheric conditions within containers (20) connected thereto, as well as maintenance of such conditions therewithin, based upon priority of relative atmospheric conditions within all containers (20) connected thereto and the capacity of said source (23).

6. The container system of claim 1, wherein said relief valve (65) comprises a biasing means (80) for directing said valve (65) from an open or venting position to its normally closed position whenever pressure within said storage volume (40) is below said predetermined maximum.

7. The container system of claim 2, wherein said sleeve (94) comprises top and bottom portions (95, 96), and an apertured membrane (98) adjacent said bottom portion (96) which permits insertion and removal of said insert (101), and substantially isolates said insert (101) from ambient conditions in use.

8. The container system of claim 1, further comprising an automatic relief valve apparatus (65) providing selective fluid communication between said storage volume (40) and the ambient atmosphere, said relief valve apparatus (65) comprising a one way valve member (70) having a predetermined mass which is oriented such that gravity helps maintain the relief valve in normally closed position, yet said valve member (70) is displaced to vent the atmosphere within said storage volume (40) when the pressure therewithin reaches a predetermined maximum.

9. The container system of claim 1, wherein said system further comprises means for monitoring (47) the relative atmospheric conditions within the individual containers (20) connected to said system, and said supply control program controls the provision of controlled atmosphere to one or more connected containers (20) based on preset priorities and responsive to said relative atmospheric conditions within said containers (20).

10. A storage and shipping system (15) for perishable products such as fruit and vegetables comprising:
- a plurality of independent, transportable containers (20) having a housing (30) and a floor (38) defining a storage volume (40) for perishable products which is substantially air tight, at least one door member (36) which can be opened for loading/unloading procedures and sealed for storage and shipping procedures, an input port (45) on said housing for detachably and selectively providing fluid connection (55) between said storage volume and a source (23) for providing a controlled atmosphere thereto, and an automatic relief valve (65) to ensure that the pressure within said storage volume (40) does not exceed a predetermined maximum;
- at least one central station (24) for controlling the internal atmosphere of a plurality of individual containers (20), said station (24) comprising a source of controlled atmosphere (23), said source (23) having a predetermined gas output capacity;
- means for selectively and detachably connecting (53) said source (23) to one or more individual containers (20); and
- means for selectively distributing said controlled atmosphere to said individual containers (25) in accordance with a predetermined control program having a plurality of preset control modes, including at least two of Pull-Down High Priority Mode, Pull-Down Low Priority Mode, Maintenance Mode, Quick Cycle low Priority Mode, and Quick Cycle High Priority Mode to optimally establish and maintain a controlled atmosphere within a variable number of said independent containers (20) connected to said central station (24).

11. The storage and shipping system of claim 10, wherein said container (20) further comprises a floor (38) within said storage volume (40) and said housing for supporting perishable products, and at least one check valve drain member (90) located adjacent a corresponding drain hole in said floor (38) to enable fluids such as condensation and the like to be drained from said storage volume (40), said drain member (92) further comprising a flexible tubular sleeve member (94) to be connected adjacent a drain hole in said floor, and a substantially tubular check valve insert (101) including a valve seat (103), a valve opening (106) in said seat, and a floatation ball (105) within said insert (101) and normally seated on said seat closing said opening, whereby said insert (101) can be inserted and removed from said sleeve (94) from below said floor (38).

12. The storage and shipping system of claim 10, wherein said means for selectively distributing said controlled atmosphere comprises one or more distribution control units (25) which distribute controlled atmosphere to a plurality of zones of connected containers (20) in accordance with said predetermined control program.

13. The container system of claim 10, wherein said means for selectively distributing said controlled atmosphere (25) includes a plurality of preset control modes and a hierarchy for selectively implementing particular control modes for optimally providing controlled atmosphere from said source (23) to a plurality of connected containers (20) in accordance with the capacity of said source (23), said distributing means comprising a program for determining optimal allotment of the controlled atmosphere in accordance with said hierarchy and capacity.

14. The container system of claim 12, wherein said plurality of distribution control units (25) are interactively connected with one another to optimally provide controlled atmosphere to the plurality of containers (20) attached to each of said controlling means (25) from a single central source (23).

15. The container system of claim 10, wherein said relief valve (65) comprises a one way valve member (70) having a predetermined mass which is oriented such that gravity helps to maintain the relief valve in normally closed position, said valve member (70) being displaced to vent the atmosphere within said storage volume (40) when the pressure therewithin exceeds a predetermined maximum, and a biasing means (80) associated with said one way valve member (70) for directing said valve (65) from an open or venting position to its normally closed position whenever pressure within said storage volume (40) is below said predetermined maximum.

16. The container system of claim 10, further comprising at least one check valve drain member (90) located adjacent a corresponding drain hole formed in said floor (38) to enable fluids such as condensation and the like to be drained from said storage volume (40), said drain member (90) further comprising a flexible tubular sleeve member (94) to be connected adjacent a drain hole in said floor (38), and a substantially tubular check valve insert (101) including a valve seat (103), a valve opening (106) in said seat, and a floatation ball (165) within said insert (101) and normally seated on said seat closing said opening, whereby said insert (101) can be inserted and removed from said sleeve (94) from below said floor (38).

17. The container system of claim 16, wherein said sleeve (94) comprises top and bottom portions (95, 96), and an apertured membrane (98) adjacent said bottom portion (96) which permits insertion and removal of said insert (101), and helps to substantially isolate said insert (101) from ambient conditions in use.

18. A method for the storage and shipping of perishable products such as fruit and vegetables in containers having controlled internal atmospheres to maintain optimal freshness and quality of such products, said method comprising the steps of:
- providing a container system (15) including a plurality of independent transportable containers (20) having a housing (30) and a floor (38) defining a substantially air tight storage volume (40) for perishable products, at least one door member (36) which can be opened for loading/unloading procedures and sealed for storage and shipping procedures, and an input port (45) on said housing (30) for detachably and selectively providing fluid connection (55) between said storage volume (40) and a source (23) for providing a controlled atmosphere thereto;
- providing at least one central station (25) with said system for controlling the internal atmosphere of a plurality of individual containers connected to the system, said station comprising a source of controlled atmosphere gas (23) having a predetermined output capacity, means for selectively and detachably connecting (53) said source (23) to one or more individual containers (20), means for controlling (24) distribution of controlled atmosphere via a plurality of predetermined control modes, and means for selectively distributing said controlled atmosphere gas (25) to individual containers;
- loading one or more individual, transportable containers (20) with perishable products;
- sealing the loaded individual containers (20) in a substantially air tight manner;
- independently connecting one or more loaded and sealed containers (20) to said central station (23);
- establishing a hierarchy for selectively implementing particular control modes for optimally providing controlled atmosphere from said source (23) to a plurality of containers (20) connected to the system in accordance with the capacity of said source (23);
- providing a controlled atmosphere to the storage volume (40) of the connected containers (20) in accordance with a predetermined control mode selected from one of Pull-Down High Priority Mode, Pull-Down Low Priority Mode, Maintenance Mode, Quick Cycle Low Priority Mode, and Quick Cycle High Priority Mode and said hierarchy to establish a substantially uniform controlled atmosphere among the individual containers (20); and
- providing additional controlled atmosphere gas to said containers (20) from time to time in accordance with a different control mode selected from one of Pull-Down High Priority Mode, Pull-Down Low Priority Mode, Maintenance Mode, Quick Cycle Low Priority Mode, and Quick Cycle High Priority Mode and said hierarchy for augmenting the controlled atmosphere within individual containers (20) as necessary.

19. The method of claim 18, wherein said step of providing additional controlled atmosphere gas to the storage volumes (40) of the connected containers (20) is undertaken in response to monitored internal atmospheres of the containers.

20. The method of claim 18, wherein a plurality of controllers (25) are associated with the central station (24), each controller (25) connected to a plurality of individual containers (20) making up one or more zones, and wherein said controllers (25) interact with each other to provide an optimal controlled atmosphere within connected containers (20) in a plurality of zones in accordance with said hierarchy and the capacity of said source (23).

21. The method of claim 18, wherein said controlled atmosphere is provided to connected containers (20) in an orderly manner such that a predetermined first lowered oxygen level atmosphere is substantially uniformly provided to all of the connected containers (20) in accordance with the relative internal atmospheres of the respective containers (20) and the capacity of said source (23) and, thereafter, additional controlled atmosphere gas is provided to said containers (20) under a different control mode to establish a second and optimal low oxygen atmosphere within said containers (20) connected to said system.

22. The method of claim 21, wherein said first lowered oxygen level is accomplished in a pulldown control mode, the second optimal low oxygen atmosphere is accomplished in a quick cycle control mode, and maintenance of said optimal low oxygen atmosphere is accomplished in a maintenance control mode, and wherein said hierarchy prioritizes the pulldown control mode above the quick cycle control mode, and the quick cycle control mode above the maintenance control mode.

23. A method for uniformly controlling the ripening of bananas and other perishable products from harvest to delivery , said method comprising the steps of:
- providing a combination shipping and ripening container (20) having an internal volume (40) capable of receiving and maintaining a controlled atmosphere of low oxygen content;
- loading freshly harvested, unripened perishable products into said container (20);
- cooling the loaded products to a holding temperature in a range of from about. 14°C (57° F) to about 21°C (70°F);
- stabilizing the products at said holding temperature;
- exposing said loaded products at said holding temperature to ethylene in order to uniformly initiate ripening of all of said loaded products in said container (20);
- reducing the ethylene from within said internal volume (40) by displacing a portion of the existing atmosphere from said internal volume with a controlled atmosphere of a low oxygen content in the range of 2% to 10%, inclusive, while sustaining a minimum ethylene level sufficient to support continued ripening; maintaining said low oxygen controlled atmosphere within said container (20) during storage, transportation and delivery procedures;
- returning the atmosphere within said container (20) to normal atmospheric conditions; and
- unloading ripe products from said container (20) as desired.

24. The method of claim 23 , wherein said step of adding ethylene is undertaken substantially immediately following the step of stabilizing the products at a desired holding temperature.

25. The method of claim 23 , wherein said step of adding ethylene is delayed until the loaded container (20) has been shipped to at least an intermediate stop on the way to its destination.

26. The method of claim 23, further comprising the step of shipping the products in said shipping and ripening container (20).

27. The method of claim 23, wherein said controlled atmosphere is supplied from a central source (22) which can be selectively connected to said container (20).

28. The method of claim 23, wherein said container (20) comprises a refrigeration unit for cooling the internal volume during shipping, storage, and ripening procedures.

29. The method of claim 23, further comprising the step of modifying the temperature within said internal volume (40) in order to selectively control the rate of ripening of said products held therewithin.

30. The method of claim 23, wherein said loaded products need be handled only during initial loading of fresh harvested products, and unloading of ripe products.

31. A method for uniformly controlling the ripening of bananas and other perishable products from harvest to delivery, said method comprising the steps of:
- providing a combination shipping and ripening container (20) having an internal volume (40) capable of receiving and maintaining a controlled atmosphere of low oxygen content;
- loading freshly harvested, unripened perishable products into said internal volume (40) of a container (20);
- immediately cooling the loaded products to a holding temperature of from about 14°C (58°F) to about 15°C (60°F);
- sealing the loaded container (20);
- stabilizing the products at said holding temperature;
- exposing said loaded products at said holding temperature to ethylene in order to uniformly initiate ripening of all of said loaded products in said container (20);
- displacing a portion of the ethylene containing atmosphere therewithin with a controlled atmosphere of a low oxygen content in the range of 2% to 10%, inclusive, while sustaining a minimum ethylene level sufficient to support continued ripening
- maintaining said low oxygen controlled atmosphere within said container (20) during storage, transportation and delivery procedures;
- returning the atmosphere within said container (20) to normal atmospheric conditions; and
- unloading ripe products from said container (20) as desired.

32. The method of claim 31, wherein ethylene is provided to said internal volume substantially immediately following the stabilization of said loaded products at a desired holding temperature.

33. The method of claim 31, wherein said step of exposing the products to ethylene is delayed until the loaded container (20) has been shipped to at least an intermediate stop on the way to its destination.

34. The method of claim 31, further comprising the step of shipping the products in said shipping and ripening container (20).

35. The method of claim 31, wherein said controlled atmosphere is supplied from a central source (22) which can be selectively connected to said container (20).

36. The method of claim 13, wherein said container (20) is selectively connected to a central source (22) of controlled atmosphere at different times during its shipping and storage procedures.

37. The method of claim 31, wherein said step of loading said products includes substantially filling said internal volume (40) with boxes (17) of products to be shipped and ripened.

38. The method of claim 31, further comprising the step of modifying the temperature within said internal volume (40) in order to selectively control the rate of ripening of said products held therewithin.

39. A method for uniformly controlling the ripening of bananas and other perishable products from harvest to delivery in a shipping container, wherein said loaded products need be handled only during initial loading of fresh harvested products, and unloading of ripe products, said method comprising the steps of:
- providing a combination shipping and ripening container (20) having an internal volume (40) capable of receiving and maintaining a controlled atmosphere of low oxygen content;
- loading freshly harvested, unripened perishable products into said internal volume (40) of a container (20);
- immediately cooling the loaded products to a holding temperature of from about 14°C (58° F) to about 15°C (60°F);
- sealing the loaded container (20);
- stabilizing the products at said holding temperature;
- exposing said loaded products at said holding temperature to ethylene in order to uniformly initiate ripening of all of said loaded products in said container (20);
- displacing a portion of the ethylene containing atmosphere therewithin with a controlled atmosphere of a low oxygen content in the range of 2% to 10%, inclusive, while sustaining a minimum ethylene level sufficient to support continued ripening;
- maintaining said low oxygen controlled atmosphere within said container (20) during storage transportation and delivery procedures;
- returning the atmosphere within said container (20) to normal atmospheric conditions; and
- unloading ripe products from said container (20) as desired.

40. The method of claim 39, further comprising the step of providing a low oxygen controlled atmosphere within said internal volume (40) prior to exposing said loaded products to ethylene.

41. The method of claim 39, wherein the step of exposing said loaded products to ethylene is undertaken substantially immediately following stabilization of the products at said holding temperature.

42. The method of claim 39, wherein said step of exposing said loaded products to ethylene extends for approximately 48 hours or less.

## Patentansprüche

1. Gesteuertes Atmosphären-Behältersystem (15) zum Versand und zur Lagerung von verderblichen Waren, wie z.B. Obst und Gemüse, wobei das Behältersystem eine Vielzahl von einzelnen, transportierbaren Behältern (20) umfaßt, die zum Bereitstellen einer gesteuerten Atmosphäre für die verbundenen Behälter von Zeit zu Zeit mit einer zentralen Quelle (23) verbindbar sind, wobei das System in Kombination weiters umfaßt:
- eine zentrale Quelle gesteuerter Atmosphäre (23), die einem oder mehreren Behältern (20) zuführbar ist;
- wobei jeder Behälter (20) weiters ein ein Lagervolumen (40) für verderbliche Waren definierendes Gehäuse (30), das im wesentlichen luftdicht ist, zumindest ein Türelement (36), das für Lade/Entlade-Vorgänge geöffnet werden kann und für Lager- und Versandvorgänge abdichtbar ist, und eine Einlaßöffnung (45) auf dem Gehäuse zum lösbaren und wahlweisen Vorsehen einer Flüssigkeits- und Gasverbindung (55) zwischen dem Lagervolumen und der zentralen Quelle zur Schaffung einer gesteuerten Atmosphäre dafür umfaßt, und
- eine Verteilungseinheit (25), die eine Vorrichtung zur Steuerung (24) der Verteilung der gesteuerten Atmosphäre von der zentralen Quelle (23) zu einem oder mehreren verbundenen Behältern (20) in Übereinstimmung mit einem vorbestimmten Versorgungs-Steuerprogramm aufweist, wobei das Versorgungs-Steuerprogramm Unterprogramme zur Implementierung einer Vielzahl von vorbestimmten Steuerarten beinhaltet, die zumindest zwei aus einem Hochprioritäts-Beaufschlagungsmodus, einem Niedrigprioritäts-Beaufschlagungsmodus, einem Aufrechterhaltungsmodus, einem Schnellzyklus-Niedrigprioritätsmodus und einem
Schnellzyklus-Hochprioritätsmodus beinhalten.

2. Behältersystem nach Anspruch 1, wobei der Behälter weiters einen Boden (38) innerhalb des Lagervolumens (40) und des Gehäuses (30) zum Tragen verderblicher Waren und zumindest ein Prüfventil-Ableitelement (90) umfaßt, das angrenzend an ein entsprechendes Ableitloch im Boden (38) angeordnet ist, um es Flüssigkeiten und Gasen, z.B. Kondensation und ähnlichem, zu ermöglichen, aus dem Lagervolumen abgeleitet zu werden, wobei das Ableitelement (90) weiters ein flexibles, rohrförmiges Manschetten-Element (94), das angrenzend an ein Ableitloch im Boden (38) angeschlossen ist, und einen im wesentlichen rohrförmigen Prüfventil-Einsatz (101) umfaßt, der einen Ventilsitz (103), eine Ventilöffnung (106) in dem Sitz und eine Schwimmerkugel (105) innerhalb des Einsatzes (101) beinhaltet, die normalerweise auf dem Sitz aufsitzend die Öffnung verschließt, wobei der Einsatz (101) von unterhalb des Bodens einsetzbar und aus der Manschette (94) entfernbar ist.

3. Behältersystem nach Anspruch 1, wobei die Unterprogramme des Versorgungs-Steuerprogramms eine Hierarchie zur wahlweisen Implementierung besonderer Steuerarten zur optimalen Bereitstellung der gesteuerten Atmosphäre aus der zentralen Quelle (23) für eine Vielzahl mit dieser verbundenen, einzelnen Behältern (20) in Übereinstimmung mit dem Fassungsvermögen der zentralen Quelle (23) und den relativen, atmosphärischen Bedingungen innerhalb der verbundenen Behälter (20) beinhalten.

4. Behältersystem nach Anspruch 3, wobei eine Vielzahl von Steuervorrichtungen (25) interaktiv miteinander verbunden sind, um die gesteuerte Atmosphäre für die Vielzahl von Behältern (20) optimal bereitzustellen, die mit jeder Steuervorrichtung von einer einzelnen, zentralen Quelle (23) verbunden sind.

5. Behältersystem nach Anspruch 3, wobei die Steuervorrichtung (25) vorbestimmte Steuerarten umfaßt, um die optimale Anfangs-Beaufschlagung der atmosphärischen Bedingungen innerhalb der mit dieser verbundenen Behälter (20) genauso wie die Aufrechterhaltung solcher Bedingungen darin, basierend auf der Priorität der relativen, atmosphärischen Bedingungen innerhalb aller mit dieser verbundenen Behälter (20) und dem Fassungsvermögen der Quelle (23) zu verwalten.

6. Behältersystem nach Anspruch 1, wobei das Entlüftungsventil (65) eine Vorspannvorrichtung (80) umfaßt, um das Ventil (65) immer dann von einer offenen oder lüftenden Stellung in seine normalerweise geschlossene Stellung auszurichten, wenn der Druck innerhalb des Lagervolumens (40) unterhalb des vorbestimmten Maximums ist.

7. Behältersystem nach Anspruch 2, wobei die Manschette (94) obere und untere Teile (95, 96) und eine Aperturmembran (98) umfaßt, die an den unteren Teil (96) angrenzend angeordnet ist, welcher das Einsetzen und das Entfernen des Einsatzes (101) erlaubt, und bei Verwendung im wesentlichen den Einsatz (101) von den Umgebungsbedingungen isoliert.

8. Behältersystem nach Anspruch 1, weiters umfassend eine automatische Entlüftungsventilvorrichtung (65) zur Schaffung einer wahlweisen Gas- und Flüssigkeitsverbindung zwischen dem Lagervolumen (40) und der Umgebungsatmosphäre, wobei die Entlüftungsventilvorrichtung (65) ein Einweg-Ventilelement (70) umfaßt, das eine vorbestimmte Masse aufweist, die so orientiert ist, daß die Gravitation das Entlüftungsventil in der normalerweise geschlossenen Stellung zu halten hilft, wenngleich das Ventilelement (70) verschoben wird, um die Atmosphäre innerhalb des Lagervolumens (40) zu durchlüften, wenn der Druck darin ein vorbestimmtes Maximum erreicht.

9. Behältersystem nach Anspruch 1, wobei das System weiters eine Vorrichtung zur Überwachung (47) der relativen atmosphärischen Bedingungen innerhalb der einzelnen, mit dem System verbundenen Behälter (20) umfaßt, und das Versorgungssteuerprogramm die Bereitstellung der gesteuerten Atmosphäre in einem oder mehreren verbundenen Behältern (20) basierend auf voreingestellten Prioritäten und auf die relativen, atmosphärischen Bedingungen innerhalb der Behälter (20) ansprechend steuert.

10. Lager- und Versandsystem (15) für verderbliche Waren, z.B. Obst und Gemüse, umfassend:
- eine Vielzahl von unabhängigen, transportierbaren Behältern (20) mit einem Gehäuse (30) und einem Boden (38), die ein Lagervolumen (40) für verderbliche Produkte definieren, das im wesentlichen luftdicht ist, zumindest ein Türelement (36), das für Lade/Entlade-Vorgänge geöffnet werden kann und für Lager- und Versandvorgänge abdichtbar ist, eine Einlaßöffnung (45) auf dem Gehäuse zur lösbaren und wahlweisen Bereitstellung einer Gas- und Flüssigkeits-Verbindung (55) zwischen dem Lagervolumen und einer Quelle (23) zur Bereitstellung einer gesteuerten Atmosphäre dafür und ein automatisches Entlüftungsventil (65), um zu gewährleisten, daß der Druck innerhalb des Lagervolumens (40) ein vorbestimmtes Maximum nicht übersteigt;
- zumindest eine zentrale Stelle (24) zur Steuerung der inneren Atmosphäre einer Vielzahl von einzelnen Behältern (20), welche Stelle (24) eine Quelle gesteuerter Atmosphäre (23) umfaßt, wobei die Quelle (23) ein vorbestimmtes Gasausgangsfassungsvermögen aufweist;
- eine Vorrichtung zur wahlweisen und lösbaren Verbindung (53) der Quelle (23) mit einem oder mehreren, einzelnen Behältern (20); und
- eine Vorrichtung zur wahlweisen Verteilung der gesteuerten Atmosphäre in die einzelnen Behälter (25) in Übereinstimmung mit einem vorbestimmten Steuerprogramm, das eine Vielzahl von voreingestellten Steuerarten aufweist, beinhaltend zumindest zwei aus einem Hochprioritäts-Beaufschlagungsmodus, einem Niedrigprioritäts-Beaufschlagungsmodus, einem Aufrechterhaltungsmodus, einem Schnellzyklus-Niedrigprioritätsmodus und einem Schnellzyklus-Hochprioritätsmodus, um eine gesteuerte Atmosphäre innerhalb einer variablen Anzahl der unabhängigen Behälter (20) optimal herzustellen und aufrechtzuerhalten, die mit der zentralen Stelle (24) verbunden sind.

11. Lager- und Versandsystem nach Anspruch 10, wobei der Behälter (20) weiters einen Boden (38) innerhalb des Lagervolumens (40) und des Gehäuses zum Tragen der verderblichen Produkte und zumindest ein Prüfventil-Ableitelement (90) umfaßt, das angrenzend an ein entsprechendes Ableitloch im Boden (38) angeordnet ist, um es Flüssigkeiten und Gasen, z.B. Kondensation und ähnlichem, zu ermöglichen, aus dem Lagervolumen (40) abgeleitet zu werden, wobei das Ableitelement (92) weiters ein flexibles, rohrförmiges Manschettenelement (94), das angrenzend an ein Ableitloch im Boden anschließbar ist, und einen im wesentlichen rohrförmigen Prüfventil-Einsatz (101) umfaßt, der einen Ventilsitz (103), eine Ventilöffnung (106) in dem Sitz und eine normalerweise auf dem Sitz aufsitzende Schwimmerkugel (105) innerhalb des Einsatzes (101) beinhaltet, die die Öffnung verschließt, wobei der Einsatz (101) von unterhalb des Bodens (38) eingesetzt und aus der Manschette (94) entfernt werden kann.

12. Lager- und Versandsystem nach Anspruch 10, wobei die Vorrichtung zur wahlweisen Verteilung der gesteuerten Atmosphäre eine oder mehrere Verteilungs-Steuereinheiten (25) umfaßt, die in Übereinstimmung mit dem vorbestimmten Steuerprogramm die gesteuerte Atmosphäre an eine Vielzahl von Zonen der verbundenen Behälter (20) verteilen.

13. Behältersystem nach Anspruch 10, wobei die Vorrichtung zur wahlweisen Verteilung der gesteuerten Atmosphäre (25) eine Vielzahl von voreingestellten Steuerarten und eine Hierarchie zur wahlweisen Implementierung besonderer Steuerarten zur optimalen Bereitstellung gesteuerter Atmosphäre aus der Quelle (23) für eine Vielzahl von verbundenen Behältern (20) in Übereinstimmung mit dem Fassungsvermögen der Quelle (23) beinhaltet, wobei die Verteilungsvorrichtung ein Programm zur Bestimmung der optimalen Zuteilung der gesteuerten Atmosphäre in Übereinstimmung mit der Hierarchie und dem Fassungsvermögen umfaßt.

14. Behältersystem nach Anspruch 12, wobei die Vielzahl der Verteilungs-Steuereinheiten (25) interaktiv miteinander verbunden sind, um die gesteuerte Atmosphäre optimal für die Vielzahl von Behältern (20) bereitzustellen, die mit jeder Steuervorrichtung (25) einer einzelnen, zentralen Quelle (23) verbunden sind.

15. Behältersystem nach Anspruch 10, wobei das Entlüftungsventil (65) ein Einwegventilelement (70), das eine vorbestimmte Masse aufweist, die so orientiert ist, daß die Gravitation das Überlastventil in einer normalerweise geschlossenen Position zu halten hilft, wobei das Ventilelement (70) verschoben wird, um die Atmosphäre innerhalb des Lagervolumens (40) zu durchlüften, wenn der Druck darin ein vorbestimmtes Maximum übersteigt, und eine dem Einwegventilelement (70) zugeordnete Vorspannvorrichtung (80) zum Ausrichten des Ventils (65) von einer offenen oder durchlüfteten Stellung in seine normalerweise geschlossene Stellung immer dann, wenn der Druck innerhalb des Speichervolumens (40) unterhalb des vorbestimmten Maximums ist, umfaßt.

16. Behältersystem nach Anspruch 10, weiters umfassend zumindest ein Prüfventil-Ableitelement (90), das angrenzend an ein im Boden (38) ausgebildetes, entsprechendes Ableitloch angeordnet ist, um es Flüssigkeiten und Gasen, z.B. Kondensation und ähnlichem, zu ermöglichen, aus dem Lagervolumen (40) abgeleitet zu werden, wobei das Ableitelement (90) weiters ein flexibles, rohrförmiges Manschettenelement (94), das angrenzend an ein Ableitloch im Boden (38) anschließbar ist, und einen im wesentlichen rohrförmigen Prüfventil-Einsatz (101) umfaßt, der einen Ventilsitz (103), eine Ventilöffnung (106) im Sitz und eine Schwimmerkugel (165) innerhalb des Einsatzes (101) beinhaltet, die normalerweise auf dem Sitz aufsitzend die Öffnung verschließt, wobei der Einsatz (101) von unterhalb des Bodens (38) einsetzbar und aus der Manschette (94) entfernbar ist.

17. Behältersystem nach Anspruch 16, wobei die Manschette (94) obere und untere Teile (95, 96) und eine an den unteren Teil (96) angrenzende Aperturmembran (98) umfaßt, die das Einsetzen und das Entfernen des Einsatzes (101) erlaubt und den Einsatz (101) von den Umgebungsbedingungen zu isolieren hilft.

18. Verfahren zur Lagerung und zum Versand von verderblichen Waren, z.B. Obst und Gemüse, in Behältern mit gesteuerten, inneren Atmosphären, um optimale Frische und Qualität dieser Waren zu erhalten, wobei das Verfahren die Schritte umfaßt:
- Bereitstellen eines Behältersystems (15), das eine Vielzahl von unabhängigen, transportierbaren Behältern (20), die ein Gehäuse (30) und einen Boden (38) aufweisen, die ein im wesentlichen luftdichtes Lagervolumen (40) für verderbliche Waren definieren, zumindest ein Türelement (36), das für Lade/Entladevorgänge geöffnet werden kann und für Lager- und Versandvorgänge abdichtbar sind, und eine Einlaßöffnung (45) auf dem Gehäuse (30) zur lösbaren und wahlweisen Flüssigkeits- und Gasverbindung (55) zwischen dem Lagervolumen (40) und einer Quelle (23) zur Bereitstellung einer gesteuerten Atmosphäre darin, beinhaltet;
- Bereitstellen zumindest einer zentralen Stelle (25) für das System zur Steuerung der inneren Atmosphäre einer Vielzahl von einzelnen, mit dem System verbundenen Behältern, wobei die Stelle eine Quelle eines gesteuerten Atmosphärengases (23) mit einem vorbestimmten Ausgangsfassungsvermögen, eine Vorrichtung zur wahlweisen und lösbaren Verbindung (53) der Quelle (23) mit einem oder mehreren einzelnen Behältern (20), eine Vorrichtung zur Steuerung (24) der Verteilung der gesteuerten Atmosphäre über eine Vielzahl von vorbestimmten Steuerarten und eine Vorrichtung zur wahlweisen Verteilung des gesteuerten Atmosphärengases (25) an mehrere Behältern umfaßt:
- Beladen eines oder mehrerer einzelner, transportierbarer Behälter (20) mit verderblichen Produkten;
- Abdichten der beladenen einzelnen Behälter (20) in einer im wesentlichen luftdichten Weise;
- Unabhängiges Verbinden einer oder mehrerer beladener und abgedichteter Behälter (20) mit einer zentralen Stelle (23);
- Herstellen einer Hierarchie zur wahlweisen Implementierung besonderer Steuerarten zur optimalen Bereitstellung gesteuerter Atmosphäre aus einer Quelle (23) für eine Vielzahl von Behältern (20), die mit dem System in Übereinstimmung mit dem Fassungsvermögen der Quelle (23) verbunden sind;
- Bereitstellen einer gesteuerten Atmosphäre für das Lagervolumen (40) der verbundenen Behälter (20) in Übereinstimmung mit einer vorbestimmten Steuerart, ausgewählt aus einem von einem Hochprioritäts-Beaufschlagungsmodus, einem Niedrigprioritäts-Beaufschlagungsmodus, einem Aufrechterhaltungsmodus, einem Schnellzyklus-Niedrigprioritätsmodus und einem Schnellzyklus-Hochprioritätsmodus und der Hierarchie, um eine im wesentlichen gleichförmige, gesteuerte Atmosphäre unter den einzelnen Behältern (20) herzustellen; und
- Bereitstellen von zusätzlichem gesteuertem Atmosphärengas für die Behälter (20) von Zeit zu Zeit in Übereinstimmung mit einer unterschiedlichen Steuerart ausgewählt aus einem von einem Hochprioritäts-Beaufschlagungsmodus, einem Niedrigprioritäts-Beaufschlagungsmodus, einem Aufrechterhaltungsmodus, einem Schnellzyklus-Niedrigprioritätsmodus und einem Schnellzyklus-Hochprioritätsmodus und der Hierarchie zur Vermehrung der gesteuerten Atmosphäre innerhalb der einzelnen Behälter (20) nach Bedarf.

19. Verfahren nach Anspruch 18, wobei der Schritt zur Bereitstellung zusätzlichen gesteuerten Atmosphärengases für das Lagervolumen (40) der verbundenen Behälter (20) in Abhängigkeit von überwachten, inneren Atmosphären der Behälter vorgenommen wird.

20. Verfahren nach Anspruch 18, wobei eine Vielzahl von Steuereinheiten (25) der zentralen Stelle (24) zugeordnet ist, wobei jede Steuereinheit (25) mit einer Vielzahl von einzelnen Behältern (20) verbunden ist, die eine oder mehrere Zonen bilden, und wobei die Steuereinheiten (25) miteinander zusammenwirken, um eine optimale, gesteuerte Atmosphäre innerhalb der verbundenen Behälter (20) in einer Vielzahl von Zonen in Übereinstimmung mit der Hierarchie und dem Fassungsvermögen der Quelle (23) zu schaffen.

21. Verfahren nach Anspruch 18, wobei die gesteuerte Atmosphäre für die verbundenen Behälter (20) in einer ordnungsgemäßen Weise so bereitgestellt ist, daß eine vorbestimmte erste erniedrigte Sauerstoffniveau-Atmosphäre im wesentlichen gleichmäßig für alle verbundenen Behälter (20) in Übereinstimmung mit den relativen inneren Atmosphären der entsprechenden Behälter (20) und dem Fassungsvermögen der Quelle (23) vorgesehen wird und danach zusätzliches gesteuertes Atmosphärengas für die Behälter (20) unter einer unterschiedlichen Steuerart vorgesehen wird, uni eine zweite und optimale niedrige Sauerstoff-Atmosphäre innerhalb der mit dem System verbundenen Behälter (20) herzustellen.

22. Verfahren nach Anspruch 21, wobei das erste erniedrigte Sauerstoff-Niveau durch einen Beaufschlagungs-Steuermodus erreicht wird, die zweite optimale niedrige Sauerstoff-Atmosphäre in einem Schnellzyklus-Steuermodus erzielt wird, und die Aufrechterhaltung der optimalen niedrigen Sauerstoff-Atmosphäre in einem Aufrechterhaltungs-Steuermodus erreicht wird, und wobei die Hierarchie den Beaufschlagungs-Steuermodus vor dem Schnellzyklus-Steuermodus und den Schnellzyklus-Steuermodus vor dem Wartungs-Steuermodus bevorzugt.

23. Verfahren zur gleichmäßigen Steuerung des Reifens von Bananen und anderen verderblichen Waren von der Ernte bis zur Auslieferung, wobei das Verfahren die Schritte umfaßt:
- Bereitstellen eines Kombinations-Versand- und Reifebehälters (20), der ein inneres Volumen (40) aufweist, das zur Erhaltung und Aufrechterhaltung einer gesteuerten Atmosphäre eines niedrigen Sauerstoffgehalts geeignet ist;
- Laden von frisch geernteten, unreifen verderblichen Waren in den Behälter (20);
- Kühlung der geladenen Waren auf eine Haltetemperatur in einem Bereich von ungefähr 14°C (57°F) bis ungefähr 21°C (70°F);
- Stabilisierung der Waren auf der Haltetemperatur;
- Begasung der geladenen Waren mit Äthylen bei der Haltetemperatur, um gleichförmige Reifung aller geladener Waren im Behälter (20) zu einzuleiten;
- Reduzieren des Äthylens im inneren Volumen (40) durch Verdrängen eines Teils der existierenden Atmosphäre aus dem inneren Volumen mit einer gesteuerten Atmosphäre eines niedrigen Sauerstoffgehalts in dem Bereich von 2% bis 10% inklusive, während ein minimales Äthylen-Niveau, das ausreichend ist, um die kontinuierliche Reifung zu unterstützen, aufrechterhalten wird;
- Aufrechterhalten der niedrigen, gesteuerten Sauerstoff-Atmosphäre innerhalb des Behälters (20) während der Lagerungs-, der Transport- und der Lieferungsabläufe;
- Wiederherstellen der Atmosphäre innerhalb des Behälters (20) auf normale atmosphärische Bedingungen; und
- Entladen der reifen Waren von dem Behälter (20) nach Wunsch.

24. Verfahren nach Anspruch 23, wobei der Schritt des Zusetzens von Äthylen im wesentlichen unmittelbar nach dem Schritt des Stabilisierens der Waren auf einer gewünschten Haltetemperatur unternommen wird.

25. Verfahren nach Anspruch 23, wobei der Schritt des Zusetzens von Äthylens verzögert wird, bis der beladene Behälter (20) zumindest bis zu einem Zwischenhalt auf dem Weg zu seinem Ziel versandt worden ist.

26. Verfahren nach Anspruch 23, weiters beinhaltend den Schritt des Versendens der Waren in den Versand- und Reifungs-Behältern (20).

27. Verfahren nach Anspruch 23, wobei die gesteuerte Atmosphäre von einer zentralen Quelle (22) geliefert wird, die wahlweise mit dem Behälter (20) verbindbar ist.

28. Verfahren nach Anspruch 23, wobei der Behälter (20) eine Kühleinheit zur Kühlung des inneren Volumens während der Versand-, der Lagerungs- und der Reifungsvorgänge umfaßt.

29. Verfahren nach Anspruch 23, weiters umfassend den Schritt der Temperaturveränderung innerhalb des inneren Volumens (40), um die Reifungsgeschwindigeit der darin befindlichen Waren wahlweise zu steuern.

30. Verfahren nach Anspruch 23, wobei die geladenen Waren nur während des anfänglichen Beladens der frisch geernteten Waren und während des Entladens der reifen Waren behandelt werden müssen.

31. Verfahren zur gleichförmigen Steuerung der Reifung von Bananen und anderen verderblichen Waren von der Ernte bis zur Auslieferung, wobei das Verfahren die Schritte umfaßt:
- Bereitstellen eines Kombinations-Versand- und Reifungsbehälters (20), der ein inneres Volumen (40) aufweist, das das Erhalten und das Aufrechterhalten einer gesteuerten Atmosphäre mit einem niedrigen Sauerstoffgehalt ermöglicht;
- Laden von frisch geernteten, unreifen verderblichen Waren in das innere Volumen (40) eines Behälters (20);
- Unmittelbares Kühlen der beladenen Waren auf eine Haltetemperatur zwischen ungefähr 14°C (58°F) und ungefähr 15°C (60°F);
- Abdichten des beladenen Behälters (20);
- Stabilisieren der Waren bei der Haltetemperatur;
- Begasen der geladenen Waren mit Äthylen bei der Haltetemperatur, um die gleichförmige Reifung von allen geladenen Waren im Behälter (20) einzuleiten;
- Verdrängen eines Teils der Äthylen enthaltenden Atmosphäre darin mit einer gesteuerten Atmosphäre eines niedrigen Sauerstoff-Gehalts im Bereich von 2% bis 10% inklusive während ein minimales Äthylen-Niveau, das zur Stützung der kontinuierlichen Reifung ausreicht, aufrechterhalten wird
- Aufrechterhalten der gesteuerten niedrigen Sauerstoff-Atmosphäre innerhalb des Behälters (20) während der Lagerung, des Transports und der Lieferung der Waren;
- Wiederherstellen der Atmosphäre innerhalb des Behälters (20) auf normale atmosphärische Bedingungen; und
- Entladen der reifen Waren aus dem Behälter (20) nach Wunsch.

32. Verfahren nach Anspruch 31, wobei Äthylen im wesentlichen unmittelbar nach der Stabilisierung der beladenen Produkte bei einer gewünschten Haltetemperatur im inneren Volumen vorgesehen wird.

33. Verfahren nach Anspruch 31, wobei der Schritt des Begasens der Waren mit Äthylen verzögert wird, bis der beladene Behälter (20) zumindest zu einem Zwischenhalt auf dem Weg zu seinem Ziel versandt worden ist.

34. Verfahren nach Anspruch 31, weiters umfassend den Schritt des Versendens der Waren in den Versand- und Reifungsbehältern (20).

35. Verfahren nach Anspruch 31, wobei die gesteuerte Atmosphäre von einer zentralen Quelle (22) geliefert wird, die wahlweise mit dem Behälter (20) verbindbar ist.

36. Verfahren nach Anspruch 13, wobei der Behälter (20) zu verschiedenen Zeiten während seines Versand- und Speicherablaufes wahlweise mit einer zentralen Quelle (22) gesteuerter Atmosphäre verbunden wird.

37. Verfahren nach Anspruch 31, wobei der Schritt des Beladens der Waren im wesentlichen das Füllen des inneren Volumens (40) mit Schachteln (17) mit den zu versendenden und zu reifenden Waren beinhaltet.

38. Verfahren nach Anspruch 31, weiters umfassend den Schritt des Veränderns der Temperatur innerhalb des inneren Volumens (40), um die Reifungsrate der darin gehaltenen Waren wahlweise steuern zu können.

39. Verfahren zur gleichförmig gesteuerten Reifung von Bananen und anderen verderblichen Waren von der Ernte bis zur Auslieferung in einem Versandbehälter, wobei die geladenen Waren nur während des anfänglichen Beladens der frisch geernteten Waren und des Entladens der reifen Waren behandelt werden müssen, welches Verfahren die Schritte umfaßt:
- Bereitstellen eines Kombinations-Versand- und Reifungsbehälters (20), der ein inneres Volumen (40) aufweist, das zum Erhalten und zur Aufrechterhaltung einer gesteuerten Atmosphäre niedrigen Sauerstoffgehalts in der Lage ist;
- Laden frisch geernteter, unreifer verderblicher Waren in das innere Volumen (40) eines Behälters (20);
- Unmittelbares Kühlen der geladenen Waren auf eine Haltetemperatur von ungefähr 14°C (58°F) bis ungefähr 15°C (60°F);
- Abdichten des beladenen Behälters (20);
- Stabilisieren der Waren auf der Haltetemperatur;
- Begasen der geladenen Waren mit Äthylen bei der Haltetemperatur, um die gleichförmige Reifung von allen geladenen Waren im Behälter (20) einzuleiten;
- Verdrängen eines Teils der Äthylen enthaltenden Atmosphäre darin mit einer gesteuerten Atmosphäre eines niedrigen Sauerstoffgehaltes im Bereich von 2% bis 10% inklusive, während ein Mindest-Äthylenniveau aufrechterhalten wird, das ausreicht, um die kontinuierliche Reifung zu unterstützen;
- Aufrechterhalten der gesteuerten, niedrigen Sauerstoff-Atmosphäre innerhalb des Behälters (20) während der Lagerungs-, der Transport- und der Auslieferungsvorgänge.
- Wiederherstellen der Atmosphäre innerhalb des Behälters (20) auf normale atmosphärische Bedingungen; und
- Entladen der reifen Waren aus dem Behälter (20) nach Wunsch.

40. Verfahren nach Anspruch 39, weiters umfassend den Schritt des Bereitstellens einer gesteuerten niedrigen Sauerstoff-Atmosphäre innerhalb des inneren Volumens (40) vor dem Begasen der geladenen Waren mit Äthylen.

41. Verfahren nach Anspruch 39, wobei der Schritt des Begasens der geladenen Waren mit Äthylen im wesentlichen unmittelbar nach der Stabilisierung der Waren bei der Haltetemperatur ausgeführt wird.

42. Verfahren nach Anspruch 39, wobei der Schritt des Begasens der geladenen Waren mit Äthylen sich auf ungefähr 48 Stunden oder weniger erstreckt.

## Revendications

1. Système de conteneurs à atmosphère régulée (15) pour expédier et stocker des produits périssables tels que des fruits et des légumes, dans lequel ledit système de conteneurs comprend une pluralité de conteneurs individuels, transportables (20) qui doivent être raccordés, de temps en temps, à une source centrale (23) destinée à fournir une atmosphère régulée aux conteneurs raccordés, ledit système comprenant, en outre, en combinaison :
- une source centrale d'atmosphère régulée (23) destinée à être fournie à un ou plusieurs conteneurs (20);
- chaque conteneur (20) comprenant, en outre, un cadre (30) définissant un volume de stockage (40) pour produits périssables qui est essentiellement étanche à l'air, au moins un élément de porte (36) qui peut être ouvert pour les opérations de chargement/ déchargement et hermétiquement fermé pour les opérations de stockage et d'expédition, et un orifice d'admission (45) sur ledit cadre pour établir, de manière détachable et sélective, une connexion fluidique (55) entre ledit volume de stockage et ladite source centrale destinée à lui fournir une atmosphère régulée; et
- une unité de contrôle de distribution (25) dotée d'un moyen (24) destiné à contrôler la distribution de ladite atmosphère régulée à partir de ladite source centrale (23) à un ou plusieurs conteneurs raccordés (20), en fonction d'un programme de contrôle d'apport prédéterminé, ledit programme de contrôle d'apport comprenant des sous-programmes pour mettre en oeuvre une pluralité de modes de contrôle prédéterminés, comprenant au moins deux modes choisis parmi le mode Réduire haute priorité, le mode Réduire basse priorité, le mode Maintien, le mode Cycle rapide basse priorité, et le mode Cycle rapide haute priorité.

2. Système de conteneurs selon la revendication 1, dans lequel ledit conteneur comprend, en outre, un socle (38) à l'intérieur dudit volume de stockage (40) et dudit cadre (30) pour supporter des produits périssables, et au moins un élément de purge de soupape de retenue (90) en une position adjacente à un orifice de purge correspondant dans ledit socle (38) pour permettre à des fluides comme la condensation et autres d'être purgés dudit volume de stockage, ledit élément de purge (90) comprenant, en outre, un élément de manchon tubulaire souple (94) destiné à être connecté en une position adjacente à un orifice de purge dans ledit socle (38), et un insert pour soupape de retenue essentiellement tubulaire (101) comprenant un siège de soupape (103), une ouverture de soupape (106) dans ledit siège, et un flotteur (105) à l'intérieur dudit insert (101) et normalement situé sur ledit siège en fermeture de ladite ouverture, de façon que ledit insert (101) puisse être inséré et retiré dudit manchon (94) par dessous ledit socle.

3. Système de conteneurs selon la revendication 1, dans lequel lesdits sous-programmes du programme de contrôle d'apport comprennent une hiérarchie destinée à mettre sélectivement en oeuvre des modes de contrôle particuliers pour fournir, de manière optimale, une atmosphère régulée provenant de ladite source centrale (23) à une pluralité de conteneurs individuels (20) raccordés à celle-ci, en fonction de la capacité de ladite source centrale (23) et des conditions atmosphériques relatives qui règnent à l'intérieur desdits conteneurs raccordés (20).

4. Système de conteneurs selon la revendication 3, dans lequel une pluralité de moyens de contrôle (25) sont raccordés interactivement entre eux pour fournir, de manière optimale, l'atmosphère régulée à la pluralité de conteneurs (20) raccordés à chacun desdits moyens de contrôle à partir d'une seule source centrale (23).

5. Système de conteneurs selon la revendication 3, dans lequel lesdits moyens de contrôle (25) comprennent des modes de contrôle prédéterminés pour gérer la réduction initiale optimale des conditions atmosphériques qui règnent à l'intérieur des conteneurs (20) raccordés, ainsi que le maintien de ces conditions à l'intérieur de ceux-ci, sur la base de la priorité des conditions atmosphériques relatives qui règnent à l'intérieur de tous les conteneurs (20) raccordés et de la capacité de ladite source (23).

6. Système de conteneurs selon la revendication 1, dans lequel ladite soupape de sûreté (65) comprend un moyen d'inclinaison (80) pour diriger ladite soupape (65) depuis une position ouverte ou d'aération vers sa position normalement fermée, chaque fois que la pression à l'intérieur dudit volume de stockage (40) est au-dessous dudit maximum prédéterminé.

7. Système de conteneurs selon la revendication 2, dans lequel ledit manchon (94) comprend des parties supérieure et inférieure (95, 96) et une membrane à ouvertures (98) adjacente à ladite partie inférieure (96) qui permet l'insertion et le retrait dudit insert (101), et isole substantiellement ledit insert (101) des conditions ambiantes, en cours d'utilisation.

8. Système de conteneurs selon la revendication 1, comprenant, en outre, un appareil à soupape de sûreté automatique (65) établissant une communication fluidique sélective entre ledit volume de stockage (40) et l'atmosphère ambiante, ledit appareil à soupape de sûreté (65) comprenant un élément de soupape antiretour (70) ayant une masse prédéterminée qui est orienté de façon que la gravité contribue à maintenir la soupape de sûreté dans sa position normalement fermée, ledit élément de soupape (70) pouvant cependant être déplacé pour permettre à l'atmosphère de pénétrer à l'intérieur dudit volume de stockage (40) quand la pression à l'intérieur de celui-ci atteint un maximum prédéterminé.

9. Système de conteneurs selon la revendication 1, dans lequel ledit système comprend, en outre, un moyen (47) destiné à surveiller les conditions d'atmosphère relative à l'intérieur des conteneurs individuels (20) raccordés audit système, et ledit programme de contrôle d'apport contrôle l'apport d'atmosphère régulée dans un ou plusieurs conteneurs raccordés (20), sur la base de priorités prédéfinies et en réponse auxdites conditions atmosphériques relatives qui règnent à l'intérieur desdits conteneurs (20).

10. Système de stockage et d'expédition (15) pour produits périssables tels que des fruits et des légumes, comprenant :
- une pluralité de conteneurs indépendants, transportables (20) ayant un cadre (30) et un socle (38) définissant un volume de stockage (40) pour produits périssables qui est essentiellement étanche à l'air, au moins un élément de porte (36) qui peut être ouvert pour des opérations de chargement/ déchargement et hermétiquement fermé pour des opérations de stockage et d'expédition, un orifice d'admission (45) sur ledit cadre pour établir, de manière détachable et sélective, une connexion fluidique (55) entre ledit volume de stockage et une source (23) destinée à lui fournir une atmosphère régulée, et une soupape de sûreté automatique (65) pour s'assurer que la pression à l'intérieur dudit volume de stockage (40) n'excède pas un maximum prédéterminé;
- au moins une station centrale (24) pour contrôler l'atmosphère interne d'une pluralité de conteneurs individuels (20), ladite station (24) comprenant une source d'atmosphère régulée (23), ladite source (23) ayant une capacité de sortie de gaz prédéterminée ;
- un moyen (53) destiné à raccorder, de manière sélective et détachable, ladite source (23) à un ou plusieurs conteneurs (20) individuels ; et
- un moyen (25) destiné à distribuer, de manière sélective, ladite atmosphère régulée auxdits conteneurs individuels (20), en fonction d'un programme de contrôle prédéterminé comprenant une pluralité de sous-programmes de contrôle prédéfinis, comprenant au moins deux modes choisis parmi le mode Réduire haute priorité, le mode Réduire basse priorité, le mode Maintien, le mode Cycle rapide basse priorité, et le mode Cycle rapide haute priorité et à établir et à maintenir, de manière optimale, une atmosphère régulée à l'intérieur d'un nombre variable desdits conteneurs indépendants (20) raccordés à ladite station centrale (24).

11. Système de stockage et d'expédition selon la revendication 10, dans lequel ledit conteneur (20) comprend, en outre, un socle (38) à l'intérieur dudit volume de stockage (40) et dudit cadre pour supporter des produits périssables, et au moins un élément de purge de soupape de retenue (90) en une position adjacente à un orifice de purge correspondant dans ledit socle (38) pour permettre à des fluides comme la condensation et autres d'être purgés dudit volume de stockage (40), ledit élément de purge (92) comprenant, en outre, un élément de manchon tubulaire souple (94) destiné à être raccordé en une position adjacente à un orifice de purge dans ledit socle, et un insert (101) pour soupape de retenue essentiellement tubulaire comprenant un siège de soupape (103), une ouverture de soupape (106) dans ledit siège, et un flotteur (105) à l'intérieur dudit insert (101) et normalement situé sur ledit siège en fermeture de ladite ouverture, de façon que ledit insert (101) puisse être inséré et retiré dudit manchon (94) par dessous ledit socle (38).

12. Système de stockage et d'expédition selon la revendication 10, dans lequel ledit moyen destiné à distribuer sélectivement ladite atmosphère régulée comprend une ou plusieurs unités de contrôle de distribution (25) qui distribuent l'atmosphère régulée à une pluralité de zones de conteneurs raccordés (20), en fonction d'un programme de contrôle prédéterminé.

13. Système de conteneurs selon la revendication 10, dans lequel ledit moyen destiné à distribuer sélectivement ladite atmosphère régulée (25) comprend une pluralité de modes de contrôle prédéfinis et une hiérarchie destinée à mettre sélectivement en oeuvre des modes de contrôle particuliers pour fournir, de manière optimale, une atmosphère régulée provenant de ladite source (23) à une pluralité de conteneurs raccordés (20), en fonction de la capacité de ladite source (23), ledit moyen de distribution comprenant un programme pour déterminer un volume optimal d'atmosphère régulée, en fonction desdites hiérarchie et capacité.

14. Système de conteneurs selon la revendication 12, dans lequel ladite pluralité d'unités de contrôle de distribution (25) sont raccordées interactivement entre elles pour fournir, de manière optimale, une atmosphère régulée à la pluralité de conteneurs (20) raccordés à chacun desdits moyens de contrôle (25) à partir d'une seule source centrale (23).

15. Système de conteneurs selon la revendication 10, dans lequel ladite soupape de sûreté (65) comprend un élément de soupape antiretour (70) ayant une masse prédéterminée qui est orienté de façon que la gravité contribue à maintenir la soupape de sûreté dans sa position normalement fermée, ledit élément de soupape (70) étant déplacé pour permettre à l'atmosphère de pénétrer à l'intérieur dudit volume de stockage (40) quand la pression à l'intérieur de celui-ci excède un maximum prédéterminé, et un moyen d'inclinaison (80) associé audit élément de soupape antiretour (70) pour diriger ladite soupape (65) depuis une position d'ouverture ou d'aération vers sa position normalement fermée, chaque fois que la pression à l'intérieur dudit volume de stockage (40) est inférieure audit maximum prédéterminé.

16. Système de conteneurs selon la revendication 10, comprenant, en outre, au moins un élément de purge de soupape de retenue (90) en une position adjacente à un orifice de purge correspondant formé dans ledit socle (38) pour permettre à des fluides comme la condensation et autres d'être purgés dudit volume de stockage (40), ledit élément de purge (90) comprenant, en outre, un élément de manchon tubulaire souple (94) destiné à être raccordé en une position adjacente à un orifice de purge dans ledit socle (38), et un insert pour soupape de retenue essentiellement tubulaire (101) comprenant un siège de soupape (103), une ouverture de soupape (106) dans ledit siège, et un flotteur (165) à l'intérieur dudit insert (101) et normalement situé sur ledit siège en fermeture de ladite ouverture, de façon que ledit insert (101) puisse être inséré et retiré dudit manchon (94) par dessous ledit socle (38).

17. Système de conteneurs selon la revendication 16, dans lequel ledit manchon (94) comprend des parties supérieure et inférieure (95, 96), et une membrane à ouvertures (98) adjacente à ladite partie inférieure (96) qui permet l'insertion et le retrait dudit insert (101), et contribue à isoler substantiellement ledit insert (101) des conditions ambiantes, en cours d'utilisation.

18. Procédé de stockage et d'expédition de produits périssables tels que des fruits et des légumes dans des conteneurs ayant des atmosphères internes régulées pour maintenir la fraîcheur et qualité optimales de ces produits, ledit procédé comprenant les étapes suivantes :
- fourniture d'un système de conteneurs (15) comprenant une pluralité de conteneurs indépendants, transportables (20) ayant un cadre (30) et un socle (38) définissant un volume de stockage (40) essentiellement étanche à l'air pour produits périssables, au moins un élément de porte (36) qui peut être ouvert pour des opérations de chargement/déchargement et hermétiquement fermé pour des opérations de stockage et d'expédition, et un orifice d'admission (45) sur ledit cadre (30) pour établir, de manière détachable et sélective, une connexion fluidique (55) entre ledit volume de stockage (40) et une source (23) destinée à lui fournir une atmosphère régulée ;
- approvisionnement d'au moins une station centrale (25) avec ledit système pour contrôler l'atmosphère interne d'une pluralité de conteneurs individuels raccordés au système, ladite station comprenant une source d'atmosphère gazeuse régulée (23) ayant une capacité de sortie prédéterminée, un moyen (53) destiné à raccorder ladite source (23), de manière sélective et détachable, à un ou plusieurs conteneurs individuels (20), un moyen (24) destiné à contrôler la distribution d'une atmosphère régulée via une pluralité de modes de contrôle prédéterminés, et un moyen destiné à distribuer, de manière sélective, ladite atmosphère gazeuse régulée (25) à des conteneurs individuels ;
- le chargement d'un ou de plusieurs conteneurs individuels, transportables (20) avec des produits périssables ;
- la fermeture hermétique des conteneurs individuels chargés (20) d'une manière essentiellement étanche à l'air ;
- le raccordement, de manière indépendante, d'un ou de plusieurs conteneurs chargés et fermés hermétiquement (20) à ladite station centrale (23) ;
- l'établissement d'une hiérarchie destinée à mettre sélectivement en oeuvre des modes de contrôle particuliers pour fournir, de manière optimale, une atmosphère régulée provenant de ladite source (23) à une pluralité de conteneurs (20) raccordés au système, en fonction de la capacité de ladite source (23) ;
- l'apport d'une atmosphère régulée au volume de stockage (40) des conteneurs raccordés (20), en fonction d'un mode de contrôle prédéterminé choisi parmi le mode Réduire haute priorité, le mode Réduire basse priorité, le mode Maintien, le mode Cycle rapide basse priorité, et le mode Cycle rapide haute priorité et de ladite hiérarchie pour établir une atmosphère régulée essentiellement uniforme parmi les conteneurs individuels (20) ; et
- l'apport d'une atmosphère gazeuse régulée supplémentaire auxdits conteneurs (20), de temps en temps, en fonction d'un mode de contrôle différent choisi parmi le mode Réduire haute priorité, le mode Réduire basse priorité, le mode Maintien, le mode Cycle rapide basse priorité, et le mode Cycle rapide haute priorité et de ladite hiérarchie pour augmenter l'atmosphère régulée à l'intérieur des conteneurs individuels (20), comme nécessaire.

19. Procédé selon la revendication 18, dans lequel ladite étape d'apport d'une atmosphère gazeuse régulée supplémentaire aux volumes de stockage (40) des conteneurs raccordés (20) est déclenchée en réponse aux atmosphères internes surveillées des conteneurs.

20. Procédé selon la revendication 18, dans lequel un pluralité de contrôleurs (25) est associée à la station centrale (24), chaque contrôleur (25) raccordé à une pluralité de conteneurs individuels (20) constituant une ou plusieurs zones, et dans lequel lesdits contrôleurs (25) interagissent mutuellement pour fournir une atmosphère régulée optimale à l'intérieur des conteneurs raccordés (20) dans une pluralité de zones, en fonction de ladite hiérarchie et de la capacité de ladite source (23).

21. Procédé selon la revendication 18, dans lequel ladite atmosphère régulée est fournie aux conteneurs raccordés (20) d'une manière ordonnée de façon qu'une première atmosphère prédéterminée à niveau d'oxygène réduit soit fournie de manière essentiellement uniforme à tous les conteneurs (20) raccordés, en fonction des atmosphères internes relatives des conteneurs respectifs (20) et de la capacité de ladite source (23), après quoi, une atmosphère gazeuse régulée supplémentaire est fournie auxdits conteneurs (20) dans un mode de contrôle différent pour établir une seconde atmosphère optimale à basse teneur en oxygène à l'intérieur desdits conteneurs (20) raccordés audit système.

22. Procédé selon la revendication 21, dans lequel ledit premier niveau d'oxygène réduit est obtenu dans un mode de contrôle Réduire, la seconde atmosphère optimale à bas niveau d'oxygène est obtenue dans un mode de contrôle Cycle rapide, et le maintien de ladite atmosphère optimale à bas niveau d'oxygène est obtenu dans un mode de contrôle Maintien, et dans lequel ladite hiérarchie classe, par priorité, le mode de contrôle Réduire devant le mode de contrôle Cycle rapide, et le mode de contrôle Cycle rapide devant le mode de contrôle Maintien.

23. Procédé destiné à contrôler uniformément la maturation de bananes et autres produits périssables, depuis leur cueillette jusqu'à leur livraison, ledit procédé comprenant les étapes suivantes :
- fourniture d'un conteneur d'expédition et de maturation combiné (20) ayant une volume interne (40) capable de recevoir et de maintenir une atmosphère régulée à basse teneur en oxygène ;
- chargement de produits périssables récemment cueillis, pas mûrs, dans ledit conteneur (20) ;
- refroidissement des produits chargés jusqu'à une température de maintien dans une gamme allant d'environ 14°C (57°F) à 21°C (70°F) ;
- stabilisation des produits à ladite température de maintien ;
- exposition desdits produits chargés, à ladite température de maintien, à l'éthylène afin de déclencher la maturation de manière uniforme de tous lesdits produits chargés dans ledit conteneur (20) ;
- réduction de la teneur d'éthylène depuis l'intérieur dudit volume interne (40) en déplaçant une partie de l'atmosphère existante contenue dans ledit volume interne avec une atmosphère régulée à basse teneur en oxygène dans la gamme de 2 à 10 %, limites comprises, tout en conservant un niveau d'éthylène minimum suffisant pour supporter une maturation continue ;
- maintien de ladite atmosphère régulée à basse teneur en oxygène à l'intérieur dudit conteneur (20) pendant des opérations de stockage, de transport et de livraison ;
- rétablissement de l'atmosphère à l'intérieur dudit conteneur (20) à des conditions atmosphériques normales ; et
- déchargement de produits mûrs dudit conteneur (20), comme souhaité.

24. Procédé selon la revendication 23, dans lequel ladite étape d'addition d'éthylène est entreprise essentiellement immédiatement après l'étape de stabilisation des produits à une température de maintien souhaitée.

25. Procédé selon la revendication 23, dans lequel ladite étape d'addition d'éthylène est retardée jusqu'à ce que le conteneur chargé (20) ait atteint ait moins un arrêt intermédiaire sur le chemin de sa destination ;

26. Procédé selon la revendication 23, comprenant, en outre, l'étape d'expédition des produits dans ledit conteneur d'expédition et de maturation (20).

27. Procédé selon la revendication 23, dans lequel ladite atmosphère régulée est fournie à partir d'une source centrale (22) qui peut être raccordée sélectivement audit conteneur (20).

28. Procédé selon la revendication 23, dans lequel ledit conteneur (20) comprend une unité de réfrigération pour le refroidissement du volume interne pendant des opérations d'expédition, de stockage et de maturation.

29. Procédé selon la revendication 23, comprenant, en outre, l'étape de modification de la température à l'intérieur dudit volume interne (40) afin de contrôler sélectivement la vitesse de maturation desdits produits contenus dans celui-ci.

30. Procédé selon la revendication 23, dans lequel lesdits produits chargés ne doivent être manipulés que lors du chargement initial de produits fraîchement cueillis, et du déchargement de produits mûrs.

31. Procédé destiné à contrôler uniformément la maturation de bananes et autres produits périssables, depuis leur cueillette jusqu'à leur livraison, ledit procédé comprenant les étapes suivantes :
- fourniture d'un conteneur d'expédition et de maturation combiné (20) ayant un volume interne (40) capable de recevoir et de maintenir une atmosphère régulée à basse teneur en oxygène ;
- chargement de produits périssables récemment cueillis, pas mûrs, dans ledit volume interne (40) d'un conteneur (20) ;
- refroidissement immédiat des produits chargés jusqu'à une température de maintien comprise entre environ 14°C (58°F) et environ 15°C (60°F) ;
- fermeture hermétique du conteneur chargé (20) ;
- stabilisation des produits à ladite température de maintien ;
- exposition desdits produits chargés, à ladite température de maintien, à l'éthylène afin de déclencher la maturation de manière uniforme de tous lesdits produits chargés dans ledit conteneur (20) ;
- déplacement d'une partie de l'atmosphère contenant l'éthylène avec une atmosphère régulée de basse teneur en oxygène dans la gamme de 2 à 10%, limites comprises, tout en conservant un niveau d'éthylène minimum suffisant pour supporter une maturation continue ;
- maintien de ladite atmosphère régulée à basse teneur en oxygène à l'intérieur dudit conteneur (20) pendant des opérations de stockage, de transport et de livraison ;
- rétablissement de l'atmosphère à l'intérieur dudit conteneur (20) à des conditions atmosphériques normales ; et
- déchargement de produits mûrs dudit conteneur (20), comme souhaité.

32. Procédé selon la revendication 31, dans lequel l'éthylène est fourni audit volume interne essentiellement immédiatement après la stabilisation desdits produits chargés à une température de maintien souhaitée.

33. Procédé selon la revendication 31, dans lequel ladite étape d'exposition des produits à l'éthylène est retardée jusqu'à ce que le conteneur chargé (20) ait atteint au moins un arrêt intermédiaire sur le chemin de sa destination.

34. Procédé selon la revendication 31, comprenant, en outre, l'étape d'expédition des produits dans ledit conteneur d'expédition et de maturation (20).

35. Procédé selon la revendication 31, dans lequel ladite atmosphère régalée est fournie à partir d'une source centrale (22) qui peut être raccordée sélectivement audit conteneur (20).

36. Procédé selon la revendication 31, dans lequel ledit conteneur (20) est sélectivement raccordé à une source centrale (22) d'atmosphère régulée à divers moments pendant les opérations d'expédition et de stockage.

37. Procédé selon la revendication 31, dans lequel ladite étape de chargement desdits produits comprend le remplissage substantiel dudit volume interne (40) avec des caisses (17) de produits qui doivent être expédiés et mûris.

38. Procédé selon la revendication 31, comprenant, en outre, l'étape de modification de la température à l'intérieur dudit volume interne (40) afin de contrôler sélectivement la vitesse de maturation desdits produits contenus dans celui-ci.

39. Procédé destiné à contrôler uniformément la maturation de bananes et autres produits périssables, depuis leur cueillette jusqu'à leur livraison, dans un conteneur d'expédition, dans lequel lesdits produits chargés ne doivent être manipulés que lors du chargement initial de produits fraîchement cueillis, et du déchargement de produits mûrs, ledit procédé comprenant les étapes suivantes :
- fourniture d'un conteneur d'expédition et de maturation combiné (20) ayant un volume interne (40) capable de recevoir et de maintenir une atmosphère régulée à basse teneur en oxygène ;
- chargement de produits périssables récemment cueillis, pas mûrs, dans ledit volume interne (40) d'un conteneur (20) ;
- refroidissement immédiat des produits chargés jusqu'à une température de maintien comprise entre environ 14°C (58°F) et environ 15°C (60°F) ;
- fermeture hermétique du conteneur chargé (20) ;
- stabilisation des produits à ladite température de maintien ;
- exposition desdits produits chargés, à ladite température de maintien, à l'éthylène afin de déclencher la maturation de manière uniforme de tous lesdits produits chargés dans ledit conteneur (20) ;
- déplacement d'une partie de l'atmosphère contenant l'éthylène avec une atmosphère régulée de basse teneur en oxygène dans la gamme de 2 à 10%, limites comprises, tout en conservant un niveau d'éthylène minimum suffisant pour supporter une maturation continue ;
- maintien de ladite atmosphère régulée à basse teneur en oxygène à l'intérieur dudit conteneur (20) pendant des opérations de stockage, de transport et de livraison ;
- rétablissement de l'atmosphère à l'intérieur dudit conteneur (20) à des conditions atmosphériques normales ; et
- déchargement de produits mûrs dudit conteneur (20), comme souhaité.

40. Procédé selon la revendication 39, comprenant, en outre, l'étape d'alimentation en atmosphère régulée à basse teneur en oxygène dudit volume interne (40), avant l'exposition à l'éthylène desdits produits chargés.

41. Procédé selon la revendication 39, dans lequel l'étape d'exposition à l'éthylène desdits produits chargés est réalisée essentiellement immédiatement après la stabilisation des produits à ladite température de maintien.

42. Procédé selon la revendication 39, dans lequel ladite étape d'exposition à l'éthylène desdits produits chargés est approximativement de 48 heures ou moins.
